# EUROPÄISCHE PATENTSCHRIFT

(11) **EP 3 381 102 B1**
(45) Veröffentlichungstag und Bekanntmachung des Hinweises auf die Patenterteilung: **07.07.2021**
(21) Anmeldenummer: 16805346.0
(22) Anmeldetag: 24.11.2016
(51) Int. Cl.: H02J 3/32, H02J 3/38

(54) **HAUSENERGIEANLAGE UND BETRIEBSVERFAHREN ZUM BETREIBEN EINER HAUSENERGIEANLAGE**
DOMESTIC ENERGY GENERATION INSTALLATION AND OPERATING METHOD FOR OPERATING A DOMESTIC ENERGY GENERATION INSTALLATION
INSTALLATION D'ÉNERGIE À DOMICILE ET PROCÉDÉ D'EXPLOITATION D'UNE INSTALLATION D'ÉNERGIE À DOMICILE

(30) Priorität: 25.11.2015 DE 102015120450
(43) Veröffentlichungstag der Anmeldung: 03.10.2018
(73) Patentinhaber: HPS Home Power Solutions GmbH, 12489 Berlin (DE)
(72) Erfinder: HIERL, Andreas, 12526 Berlin (DE); RADUE, Dirk, 12685 Berlin (DE); SCHNEIDER, Gunnar, 15745 Wildau (DE); BENZ, Uwe, 88690 Uhldingen (DE); SCHRÖDER, Kevin, 10437 Berlin (DE); ABUL-ELLA, Zeyad, 14195 Berlin (DE)
(74) Vertreter: Eisenführ Speiser
(86) Internationale Anmeldenummer: PCT/EP2016/078690
(87) Internationale Veröffentlichungsnummer: WO 2017/089468

(56) Entgegenhaltungen:
- US-A1- 2014 337 002

## Beschreibung

Die vorliegende Erfindung betrifft eine Hausenergieanlage und ein Verfahren zum Betreiben einer Hausenergieanlage.

Hausenergieanlagen sind grundsätzlich aus dem Stand der Technik bekannt und dienen der Versorgung von Häusern, beispielsweise von Niedrigenergiehäusern, Passivhäusern oder Nullenergiehäusern, mit Energie in Form von Wärme und insbesondere in Form von Strom, beispielsweise Strom aus regenerativen Energiequellen wie beispielsweise Photovoltaik (PV)-Generatoren oder Kleinwindkraftanlagen.

Hausenergieanlagen des Standes der Technik sind derzeit noch zu teuer, komplex und entsprechen häufig nicht den Sicherheitsansprüchen für diesen Einsatz. Zudem sind regenerative Energiequellen nicht gleichmäßig und nicht regelmäßig nutzbar. Unzureichend effiziente Verfahren zum Betreiben einer Hausenergieanlage erfordern bisher eine Überdimensionierung von Hausenergieanlagen.

Durch sinkende Einspeisevergütung und steigende Energiekosten wie auch veränderte politische Rahmenbedingungen steigt der Bedarf an solchen Hausenergieanlagen, die eine weitgehende oder vollständige Autarkie - bezogen auf den elektrischen Energiebedarf, aber auch bezogen auf den Bedarf an thermischer Energie - aufweisen. Dokument US2014/337002A1 offenbart ein Verfahren zum Betreiben einer Hausenergieanlage zur autarken elektrischen Versorgung, aufweisend die Schritte: Ermitteln oder Vorgeben mindestens eines Erwartungszeitraums, Ermitteln eines zu erwartenden Lastprofils eines elektrischen Verbrauchers in dem mindestens einen Erwartungszeitraum, Ermitteln eines zu erwartenden Ertragsprofils der regenerativen Energiequelle in dem mindestens einen Erwartungszeitraum, Ermitteln oder Vorgeben einer minimalen Verbrauchs-Leistung, die der Speicher-Batterieeinheit zu jedem Zeitpunkt wenigstens entnehmbar sein soll, Ermitteln eines Ziel-Ladezustands der Speicher-Batterieeinheit und einer Energiebilanz über den mindestens einen Erwartungszeitraum aus dem zu erwartenden Ertragsprofil und dem zu erwartenden Lastprofil, Ermitteln einer zeitlichen Reichweite der Speicher-Batterieeinheit aus dem zu erwartenden Lastprofil, dem zu erwartenden Ertragsprofil und der minimalen Verbrauchs-Leistung, die zu jedem Zeitpunkt nicht unterschritten werden soll, einem aktuell ermittelten Ladezustand der Speicher-Batterieeinheit, Betreiben der Brennstoffzelleneinheit mit einer Brennstoffzellen-Leistung in Abhängigkeit der ermittelten zeitlichen Reichweite der Speicher-Batterieeinheit, insbesondere Einschalten der Brennstoffzelleneinheit, wenn die ermittelte zeitliche Reichweite der Speicher-Batterieeinheit kürzer als der mindestens eine Erwartungszeitraum ist.

Vor diesem Hintergrund ist es Aufgabe der vorliegenden Erfindung, eine Hausenergieanlage und ein Betriebsverfahren zum Betreiben einer Hausenergieanlage anzugeben, die bevorzugt energetisch vorteilhaft sind.

Gemäß eines ersten Aspekts der Erfindung wird die Aufgabe gelöst durch Verfahren gemäß Anspruch 1 zum Betreiben einer Hausenergieanlage zur autarken elektrischen Versorgung und bevorzugt zur CO2-neutralen autarken Wärmebereitstellung, vorzugsweise für Ein- und Zweifamilienhäuser. Das Verfahren weist folgende Schritte auf:
- Ermitteln oder Vorgeben mindestens eines Erwartungszeitraums, wobei sich der mindestens eine Erwartungszeitraum mindestens bis zu einer erneuten Verfügbarkeit von Energie einer regenerativen Energiequelle nach dem nächstmöglichen Sonnenaufgang erstreckt,
- Ermitteln eines zu erwartenden Lastprofils eines elektrischen Verbrauchers, insbesondere dessen elektrische Verbrauchs-Leistung in dem mindestens einen Erwartungszeitraum,
- Ermitteln eines zu erwartenden Ertragsprofils der regenerativen Energiequelle in dem mindestens einen Erwartungszeitraum, bevorzugt einer elektrischen PV-Leistung eines PV-Generators,
- Ermitteln oder Vorgeben einer minimalen Verbrauchs-Leistung, die der Speicher-Batterieeinheit zu jedem Zeitpunkt wenigstens entnehmbar sein soll, und/oder Vorgeben einer Entladeschlussspannung der Speicher-Batterieeinheit, die zu jedem Zeitpunkt nicht unterschritten werden soll,
- Ermitteln einer Energiebilanz über den mindestens einen Erwartungszeitraum aus dem zu erwartenden Ertragsprofil und dem zu erwartenden Lastprofil,
- Ermitteln einer zeitlichen Reichweite der Speicher-Batterieeinheit aus dem zu erwartenden Lastprofil, dem zu erwartenden Ertragsprofil und der minimalen Verbrauchs-Leistung, die zu jedem Zeitpunkt nicht unterschritten werden soll, einem aktuell ermittelten Ladezustand der Speicher-Batterieeinheit und bevorzugt der Entladeschlussspannung,
- Ermitteln einer Energiebilanz über den mindestens einen Erwartungszeitraum aus dem zu erwartenden Ertragsprofil und dem zu erwartenden Lastprofil,
- Betreiben der Brennstoffzelleneinheit mit einer Brennstoffzellen-Leistung in Abhängigkeit der ermittelten zeitlichen Reichweite der Speicher-Batterieeinheit, insbesondere Einschalten der Brennstoffzelleneinheit, wenn die ermittelte zeitliche Reichweite der Speicher-Batterieeinheit kürzer als der mindestens eine Erwartungszeitraum ist und/oder Ausschalten der Brennstoffzelleneinheit, wenn die ermittelte zeitliche Reichweite der Speicher-Batterieeinheit länger als der mindestens eine Erwartungszeitraum ist, und
- Betreiben der Elektrolyseeinheit, insbesondere mit einer berechneten Elektrolyse-Leistung, in Abhängigkeit der ermittelten Energiebilanz, nämlich Einschalten der Elektrolyseeinheit, wenn die ermittelte Energiebilanz positiv ist und Ausschalten der Elektrolyseeinheit, wenn die ermittelte Energiebilanz negativ ist.

Durch das erfindungsgemäße Verfahren wird eine prädiktives Energiemanagement für eine hybride, elektrisch und bevorzugt auch thermisch energieautarke Hausenergieanlage geschaffen.

Bevorzugt kann das obige erfindungsgemäße Verfahren ausgeführt werden durch eine Hausenergieanlage mit:
- einem DC-Einspeisepunkt, bevorzugt ausgebildet für eine Nenn-Spannung von 48 Volt, und/oder einem AC-Einspeisepunkt, bevorzugt ausgebildet für eine Spannung von 230 Volt, wobei der DC-Einspeisepunkt und/oder der AC-Einspeisepunkt im Betrieb zumindest zeitweise mit einem elektrischen Verbraucher, der eine Verbrauchs-Leistung aufweist, verbunden ist,
- einem elektrisch mit dem DC-Einspeisepunkt wenigstens zeitweise verbundenen PV-Generator zum Erzeugen einer elektrischen PV-Leistung,
- einer elektrisch mit dem DC-Einspeisepunkt wenigstens zeitweise verbundenen Brennstoffzelleneinheit zum Erzeugen einer elektrischen Brennstoffzellen-Leistung,
- einer elektrisch mit dem DC-Einspeisepunkt verbundenen Elektrolyseeinheit zum Erzeugen von durch die Brennstoffzelleneinheit zu verbrauchendem Wasserstoff, wobei die Elektrolyseeinheit im Betrieb mit einer elektrischen Elektrolyse-Eingangsleistung gespeist wird,
- einem Wasserstofftank, insbesondere als Langzeitenergiespeicher, der mit der Brennstoffzelleneinheit und der Elektrolyseeinheit wenigstens zeitweise fluidverbunden ist und zum Speichern von mittels der Elektrolyseeinheit zu erzeugendem und durch die Brennstoffzelleneinheit zu verbrauchendem Wasserstoff ausgebildet ist,
- einer Speicher-Batterieeinheit, insbesondere als Kurzzeitenergiespeicher, die elektrisch mit dem DC-Einspeisepunkt verbunden oder zu verbinden ist, so dass eine elektrische PV-Leistung und eine elektrische Brennstoffzellen-Leistung in die Speicher-Batterieeinheit eingespeichert werden kann und eine elektrische Elektrolyse-Eingangsleistung und eine Verbrauchs-Leistung aus der Speicher-Batterieeinheit entnommen werden können; und
- mit einem Steuermodul zum Steuern der Hausenergieanlage.

Die erfindungsgemäße Hausenergieanlage schafft die Grundlage dafür, dass der Energiebedarf eines Hauses, insbesondere eines Niedrigenergiehauses, eines Passivhauses oder eines Nullenergiehauses, sowohl hinsichtlich des Strom- als auch des Wärmebedarfs vollständig aus erneuerbaren Energiequellen gedeckt werden kann und somit vollständige CO₂-Freiheit im Betrieb besteht. Wenigstens aber kann der Strombedarf eines Hauses im Sinne einer anzustrebenden Eigenverbrauchserhöhung nahezu vollständig aus erneuerbaren Energiequellen, insbesondere mittels eines PV-Generators und/oder einer Kleinwindenergieanlage, gedeckt werden. Die erfindungsgemäße Hausenergieanlage schafft ebenfalls die Grundlage für eine autarke Energieversorgung ("off-grid") eines Hauses, insbesondere eines Niedrigenergiehauses, eines Passivhauses oder eines Nullenergiehauses.

Im Folgenden werden vorteilhafte Weiterbildungen der Hausenergieanlage gemäß des zweiten Aspekts der Erfindung beschrieben.

Bevorzugt ist die Hausenergieanlage netzautark ausgebildet, besonders bevorzugt für einen elektrisch-netzautarken Betrieb eines Ein- oder Zweifamilienhauses. Der PV-Generator kann auf eine PV-Leistung zwischen 4 Kilowatt-Peak (kWp) und 20 kWp ausgelegt sein. Bevorzugt beträgt die Brennstoffzellen-Nennleistung zwischen 600 Watt und 2500 Watt. Die Elektrolyse-Eingangsnennleistung kann zwischen 500 Watt und 5000 Watt betragen.

Die Brennstoffzelleneinheit kann eine luftgekühlte und/oder wassergekühlte Brennstoffzelleneinheit sein. Die Brennstoffzelleneinheit kann mit einem zum Belüften und/oder Beheizen eines Aufenthaltsraumes ausgebildeten Lüftungs-Heiz-Gerät wärmeverbunden oder wärmeverbindbar ist, so dass eine Brennstoffzellen-Wärmemenge an den Aufenthaltsraum abgebbar ist.

In einer bevorzugten Ausgestaltung ist die Brennstoffzelleneinheit als luftgekühlte Brennstoffzelleneinheit bereitgestellt und über eine Luftführung, insbesondere eine Zuluftführung, mit dem zum Belüften und/oder Beheizen des Aufenthaltsraumes ausgebildeten Lüftungs-Heiz-Gerät wärmeverbunden oder wärmeverbindbar. Eine Brennstoffzellen-Wärmemenge kann dem Lüftungs-Heiz-Gerät über einen Luftstrom zugeführt sein und/oder mittels eines Luftstroms dem Aufenthaltsraum zugeführt sein. Diese Ausgestaltung kommt bevorzugt bei einem Neubau, insbesondere Niedrigenergiehaus, Passivhaus oder Nullenergiehaus, zum Tragen, da typischerweise bereits eine kontrollierte Wohnraumlüftung (KWL), die ein zum Belüften und/oder Beheizen des Aufenthaltsraumes ausgebildetes Lüftungs-Heiz-Gerät aufweisen kann, bereitgestellt ist.

In einer weiteren Ausgestaltung kann die Brennstoffzelleneinheit als wassergekühlte Brennstoffzelleneinheit bereitgestellt sein. Die Brennstoffzelleneinheit kann über eine Kühlflüssigkeitsleitung mit einem thermischen Speicher wärmeverbunden oder wärmeverbindbar sein, so dass eine Brennstoffzellen-Wärmemenge in den Warmwasserspeicher abgebbar ist. Diese Ausgestaltung kommt bevorzugt bei einem Bestandsbau, insbesondere Altbau, zum Tragen, da typischerweise keine kontrollierte Wohnraumlüftung vorgesehen ist. Bevorzugt ist der thermischen Speicher als Warmwasserspeicher bereitgestellt sein. Der thermische Speicher kann als Latentwärmespeicher bereitgestellt sein.

Alternativ oder zusätzlich kann die Brennstoffzelleneinheit über eine Kühlflüssigkeitsleitung mit dem zum Belüften und/oder Beheizen des Aufenthaltsraumes ausgebildeten Lüftungs-Heiz-Gerät wärmeverbunden oder wärmeverbindbar sein. Das Lüftungs-Heiz-Gerät kann ein Warmwasser-Heizregister aufweisen, über das eine Warmwasser-Wärmemenge aus dem Warmwasserspeicher und/oder eine Elektrolyse-Wärmemenge der Elektrolyseeinheit dem Aufenthaltsraum zuführbar ist.

Bevorzugt sind die Brennstoffzelleneinheit und die Elektrolyseeinheit in einem gemeinsamen Gehäuse angeordnet und bevorzugt zum Zwecke der Verdünnung und des Abtransports von brennbaren Gasen sowie zur Kühlung und Abwärmenutzung vom Abluftstrom des Hauses durchströmt. Eine in einer Spülluft des gemeinsamen Gehäuses enthaltende Wärmemenge wird bevorzugt über einen Luft-Luft-Wärmetauscher auf einen Zuluftstrom für den Aufenthaltsraum übertragen. Besonders bevorzugt ist der Luft-Luft-Wärmetauscher ein Kreuzstrom- oder Kreuzgegenstromwärmetauscher.

Besonders bevorzugt ist die Batteriespeichereinheit und/oder der katalytische H₂-Brenner in das gemeinsame Gehäuse integriert. Die Batteriespeichereinheit kann in einem separaten Gehäuse untergebracht sein, das insbesondere lüftungstechnisch mit dem Hauptgehäuse verbunden ist. Dies ist vorteilhaft, da ein gemeinsamer Spülluft-Strom für die Abwärmenutzung und/oder für die sichere Verdünnung und den Abtransport eventuell austretender brennbarer Gase, insbesondere Wasserstoff, genutzt werden kann. Der gemeinsame Spülluftstrom ist bevorzugt die Abluft des Wohnraumes, welche die Abwärme aller Komponenten im Gehäuse aufnimmt und über den Luft-Luft-Wärmetauscher als Fortluft aus dem Gebäude abgeleitet wird. Erfindungsgemäß ist auch ein von einer kontrollierten Wohnraumlüftung unabhängiger separater Spülluftstrom eingeschlossen, welcher optional die aufgenommene Wärme über einen Luft-Wasser-Wärmetauscher in einen Warmwasserspeicher einspeisen kann und/oder über eine Kleinwärmepumpe Wärmeenergie bevorzugt an den Warmwasserspeicher abgeben kann.

Es hat sich als vorteilhaft herausgestellt, wenn die Hausenergieanlage einen Zusatz-Brenner aufweist, insbesondere aus der Gruppe katalytischer Wasserstoff-Brenner, Gastherme, Pelletkessel. Ein katalytischer Wasserstoff-Brenner als Zusatz-Brenner bietet den Vorteil, dass die Hausenergieanlage auch einen ggf. auftretenden Spitzenwärmebedarf CO₂-frei decken kann. Die Verwendung eines Pelletkessels als Zusatz-Brenner bietet den Vorteil, dass die Hausenergieanlage einen ggf. auftretenden Spitzenwärmebedarf zumindest CO₂-neutral decken kann. Der Zusatz-Brenner kann ausgangsseitig mit dem Warmwasserspeicher wenigstens zeitweise wärmeverbunden sein, bevorzugt so, dass eine Heiz-Wärmemenge an den Warmwasserspeicher abgegeben werden kann.

Die Hausenergieanlage kann einen elektrischen Versorgungsanschluss aufweisen, über den die Hausenergieanlage wenigstens zeitweise an ein Niederspannungsnetz angeschlossen ist und/oder einen Brennstoffanschluss aufweisen, über den die Hausenergieanlage wenigstens zeitweise an ein Gasnetz oder einen Ölspeicher angeschlossen ist.

In einer weiteren bevorzugten Ausführung umfasst die Hausenergieanlage eine Kleinwindkraftanlage zum Erzeugen einer elektrischen Windkraft-Leistung. Die Speicher-Batterieeinheit kann elektrisch mit der Kleinwindkraftanlage wenigstens zeitweise verbunden sein, so dass eine elektrische Windkraft-Leistung in die Speicher-Batterieeinheit eingespeichert werden kann. Vorteil dieser Ausführung ist, dass mit der Windenergie eine weitere, von der Verfügbarkeit der Sonnenenergie entkoppelte, regenerative Energiequelle vorhanden ist, welche es erlaubt, die Energiespeicher, insbesondere den Langzeitenergiespeicher, deutlich zu verkleinern.

Die Speicher-Batterieeinheit kann eine Bleibatterie, vorzugsweise eine OPzV-Gel-Batterie oder eine OPzS-Säure-Batterie, sein oder eine solche aufweisen. Die Speicher-Batterieeinheit kann eine Li-basierte oder NiMeH-basierte Hochleistungsbatterie sein oder eine solche aufweisen. Die Speicher-Batterieeinheit kann eine Redox-Flow-Batterie sein oder eine solche aufweisen. Alternativ oder zusätzlich kann die Speicher-Batterieeinheit eine Na-Nickelchlorid-Batterie (Zebra-Zelle) sein oder eine solche aufweisen. Mehrere Batterien gleicher oder verschiedener Art können vorgesehen sein. Bevorzugt beträgt die Kapazität der Speicher-Batterieeinheit: 150 Ah bis 1500 Ah bei 48 V Nennspannung.

Bevorzugt wird die Speicher-Batterieeinheit als Kurzzeitenergiespeicher verwendet, d.h. insbesondere zur Speicherung einer elektrischen Energie über wenige Tage, höchstens aber eine Woche. In die Erfindung explizit eingeschlossen ist die Kopplung der zuvor genannten unterschiedlicher Arten von Speicher-Batterieeinheiten mit Ultrakurzzeitspeichern, insbesondere von Superkapazitäten oder Hochleistungs-Batterien auf Li-Basis zur Pufferung sehr kurzzeitiger Lastspitzen. Dies hat insbesondere positive Auswirkungen auf die Lebensdauer des im allgemeinen teuren Kurzzeitenergiespeichers und erhöht die kurzfristigen Leistungsreserven bei tief entladenen Speicher-Batterieeinheiten.

Bevorzugt wird der Wasserstofftank als Langzeitenergiespeicher verwendet, d.h. insbesondere zur Speicherung von Wasserstoff über mehrere Tage bis Wochen bis hin zu einer Heizsaison. Bevorzugt weist der Wasserstofftank eine Speicherkapazität von 15 kg bis 80 kg H₂ bei einem Nenn-Betriebsdruck des Wasserstofftanks von 20 - 100 bar im Mitteldruckbereich oder 100 bar bis 1000 bar im Hochdruckbereich auf.

Bevorzugt wird der Warmwasserspeicher als Kurzzeitenergiespeicher für thermische Energie und, insbesondere in Verbindung mit einem elektrischen Heizelement, zum dynamischen Ausgleich der elektrischen Last (Load Levelling) verwendet, d.h. insbesondere zur Speicherung von thermischer Energie über wenige Tage, höchstens aber eine Woche.

Im Folgenden werden vorteilhafte Weiterbildungen des Verfahrens zum Betreiben einer Hausenergieanlage gemäß des ersten Aspekts der Erfindung beschrieben.

Für das prädiktive Energiemanagement werden während des Betriebes ständig Energiebilanzen über bestimmte Erwartungszeiträume ermittelt. Im Folgenden wird das Verfahren vereinfacht anhand der Verfügbarkeit von regenerativer Energie aus einer PV-Anlage erklärt. Sinngemäß kann das Verfahren jedoch ebenso auch auf die Verfügbarkeit anderer regenerativer Energiequellen wie z. B. die Windenergie modifiziert oder erweitert werden. Bevorzugt wird mindestens über einen kurzfristigen Erwartungszeitraum und optional über ein Teil-Zeiträume davon bilanziert, welche als herausragenden Zeitpunkt den Sonnenuntergang bzw. den Zeitpunkt vor dem Sonnenuntergang, an welchem die regenerativ erzeugte Leistung deutlich kleiner als die durchschnittlich regenerativ erzeugte Leistung wird, enthält. Der kurzfristige Erwartungszeitraum endet vorzugsweise mit dem Sonnenaufgang bzw. mit dem Zeitpunkt nach dem Sonnenaufgang, an welchem die regenerativ erzeugte Leistung einen definierten Bruchteil der durchschnittlich regenerativ erzeugten Leistung wieder erreicht, Im Folgenden wird vereinfacht von Sonnenuntergang oder Sonnenaufgang als den herausragenden Zeitpunkten im kurzfristigen Erwartungsraum gesprochen. Besonders bevorzugt werden für das Energiemanagement auch ein mittelfristiger Erwartungszeitraum welcher sich über mehrere Tage erstreckt und/oder ein langfristiger Erwartungszeitraum, welcher sich über etwa einen Jahreszyklus erstreckt, bilanziert.

Der Schritt des Ermittelns des zu erwartenden Lastprofils des elektrischen Verbrauchers umfasst bevorzugt mindestens eine, den gesamten Jahresablauf umfassende Zeitreihe, die den typischen Verbrauch an elektrischer Energie repräsentiert, sowie die optionale Berücksichtigung von Benutzereingaben zur voraussichtlichen Intensität des Energieverbrauches und/oder die Berücksichtigung von nutzerspezifischen und/oder temporären Daten jeglicher Art, die über zentrale Remote Management Systeme in das prädiktive Energiemanagement eingespeist werden. Vorteilhafterweise kann ein Nutzer das zu erwartende Leistungsprofil durch die Auswahl aus unterschiedlichen nutzerindividuellen Standard-Lastprofilen das dem Energiemanagement zugrundeliegende Leistungsprofil beeinflussen. Insbesondere kann per Nutzereingabe zwischen leistungsintensiven und sparsamen Profilen gewählt werden.

Besonders bevorzugt erfolgt der Schritt des Ermittelns eines zu erwartenden Ertragsprofils des PV-Generators unter Berücksichtigung langfristiger und insbesondere zeitlich hoch aufgelöster und/oder für den Aufstellungsort des PV-Generators spezifischer Klimadaten, wie beispielsweise Sonneneinstrahlung, Windgeschwindigkeit, Temperatur, sowie, falls verfügbar, kurzfristiger Wetterprognosen aus Wetterdiensten oder mit Hilfe von Informationen zum zu erwartenden Energieertrag, die über ein zentrales Remote Management System eingespeist werden.

Das Ermitteln oder Vorgeben einer minimalen Verbrauchs-Leistung kann interaktiv über den Nutzer beeinflusst werden.

Unter Berücksichtigung des mindestens einen Erwartungszeitraums wird mindestens eine Energiebilanz und ein Ziel-Ladezustand der Speicher-Batterieeinheit jeweils zum Sonnenaufgang und optional zum Sonnenuntergang berechnet. Die Energiebilanz ist positiv, wenn, bezogen auf den Ladezustand des vorherigen Erwartungszeitraumes ein höherer Ladezustand der Speicher-Batterieeinheit erreichbar wäre, d.h. in der Regel wenn, unter Berücksichtigung der relevanten Wirkungsgrade für die Energieumwandlung und - speicherung, voraussichtlich mehr regenerative Energie erzeugt als verbraucht wird. Unter Berücksichtigung der tatsächlichen Speicherzustände und der Bilanzen der mittel- und langfristigen Erwartungszeiträume wird im Energiemanagement ein neuer Ziel-Ladezustand der Speicher-Batterieeinheit festgelegt. Zur Erreichung der Ziel-Ladezustands kann es notwendig sein dass der Langzeitenergiespeicher Energie an den 48VDC-Einspeisepunkt abgibt, d.h. dass die Brennstoffzelle mit vom Energiemanagement vorgegebener Leistung und/oder Energieabgabemenge betrieben wird oder dass der Elektrolyseeinheit mit vom Energiemanagement vorgegebener Leistung und/oder Energieaufnahmemenge betrieben wird. Die aktuelle Leistung von Brennstoffzelle oder Elektrolyse wird vom Energiemanagement auch unter Berücksichtigung der aktuellen Leistungsflüsse im gesamten Energiesystem bestimmt.

In einer bevorzugten Ausgestaltung wird die Elektrolyseeinheit hinsichtlich ihrer Aufnahme-Leistung dynamisch betrieben. In einer bevorzugten Ausgestaltung erfolgt ein Einschalten der Elektrolyseeinheit bei einem Leistungsüberschuss, d.h. wenn die Summe aller durch die Hausenergieanlage versorgten elektrischen Verbraucher, inklusive insbesondere der Batterieladeleistung, über einen bestimmten Zeitraum kleiner als die regenerativ erzeugte Leistung, insbesondere die PV-Leistung, ist.

Bevorzugt schließt das Verfahren ein dynamisches Load Levelling ein, das sowohl über eine elektrische Beheizung des Warmwasserspeichers als auch über ein Betreiben der Elektrolyseeinheit erfolgen kann. Ein Aufteilen der auszugleichenden elektrischen Last in Ausgleichen durch elektrische Beheizung des Warmwasserspeichers und Ausgleichen durch ein Betreiben der Elektrolyseeinheit kann abhängig vom Bedarf an Wasserstoff oder Wärme eines Hauses erfolgen und/oder und unter Berücksichtigung der schnelleren Dynamik eines Heizwiderstandes im Vergleich zur Elektrolyseeinheit. Bevorzugt ist das Steuermodul zum Aufteilen der auszugleichenden elektrischen Last ausgebildet.

Besonders bevorzugt wird die Brennstoffzelleneinheit eingeschaltet, wenn zum Erreichen des Ziel-Ladezustand der Speicher-Batterieeinheit zum Ende des kurzfristigen Erwartungszeitraumes Energie aus dem Langzeitspeicher benötigt wird. Einschaltzeitpunkt, Ausschaltzeitpunkt und Leistung der Brennstoffzelle werden über das prädiktive Energiemanagement bestimmt und die Brennstoffzelle wird solange betrieben, bis die Speicher-Batterieeinheit unter Berücksichtigung des aktualisierten Ertrags- und Verbrauchsprofils zum Ende des kurzfristigen Erwartungszeitraumes einen vorgegebenen oder jeweils neu berechneten Ladezustand-Zielwert erreichen kann.

Bevorzugt wird die Brennstoffzelleneinheit im Wirkungsgradoptimum betrieben. Es hat sich gezeigt, dass ein Wirkungsgradoptimum von Brennstoffzelleneinheiten, die eine Brennstoffzellen-Nennleistung von 600 W bis 5000W aufweisen, im Bereich von 25 bis 75 Prozent der Brennstoffzellen-Nennleistung liegt. Bevorzugt, wenn eine temporär hohe elektrische Last auszugleichen ist, wird die Brennstoffzelleneinheit wenigstens zeitweise mit einer erhöhten Brennstoffzellen-Leistung von bis zu 175 Prozent der Brennstoffzellen-Nennleistung betrieben.

Die Brennstoffzelleneinheit kann bei sehr kleinem Leistungsbedarf intermittierend betrieben werden, bevorzugt derart, dass die Zeiten im Stand-by jeweils weniger als 10 Minuten betragen.

Bevorzugt wird die Elektrolyseeinheit im Wirkungsgradoptimum betrieben. Es hat sich gezeigt, dass ein Wirkungsgradoptimum von Elektrolyseeinheiten, die eine Elektrolyse-Eingangsnennleistung von 500 W bis 5000 W aufweisen, im Bereich ca. 25 bis 75 Prozent der Elektrolyse-Eingangsnennleistung liegt.

In einer besonders bevorzugten Ausgestaltung des Verfahrens wird die Elektrolyseeinheit leistungsgesteuert betrieben, insbesondere in Abhängigkeit von der ermittelten Energiebilanz. Die Elektrolyseeinheit kann vorzugsweise mit einer Elektrolyse-Eingangsleistung von weniger als 50 % der Nennleistung betrieben werden, wenn die ermittelte Energiebilanz kleiner gleich 0 ist, so dass die Elektrolyseeinheit zumindest zeitweise aus der Speicher-Batterieeinheit zu betreiben ist. Alternativ oder zusätzlich wird die Elektrolyseeinheit leistungsgesteuert in Abhängigkeit vom Füllstand des Wasserstofftanks betrieben.

Es hat sich als vorteilhaft herausgestellt, wenn die Elektrolyseeinheit nicht betrieben wird, wenn eine durch den PV-Generator prognostiziert erzeugbare elektrische PV-Leistung nicht ausreichend ist, die Speicher-Batterieeinheit bis zum Sonnenuntergang auf den vorher berechneten Ziel-Ladezustand zu bringen.

Das Verfahren kann beispielsweise zur Auswirkung haben, dass nachts die Speicher-Batterieeinheit nicht oder nur teilweise durch die Brennstoffzelleneinheit geladen wird und/oder die Speicher-Batterieeinheit bei einem Ladezustand von unter 70 Prozent gehalten wird. Das Verfahren kann auch zur Auswirkung haben, dass tagsüber die Speicher-Batterieeinheit über den PV-Generator geladen wird und/oder die Speicher-Batterieeinheit bei einem Ladezustand von über 70 Prozent gehalten wird. Das Verfahren kann vorsehen, dass die Elektrolyseeinheit unabhängig von einer tatsächlich bereitgestellten elektrischen PV-Leistung betrieben wird, insbesondere dass die Elektrolyseeinheit auch nachts betrieben wird, um zum Sonnenaufgang die Speicher-Batterieeinheit so tief entladen zu haben, dass tagsüber eine besonders hohe Ladeleistung sowie besonders viel der PV-Energie direkt in die Speicher-Batterieeinheit eingespeichert werden kann.

In einer besonders bevorzugten Ausgestaltung des Verfahrens wird der im Warmwasserspeicher angeordnete Heizstab mit dem DC-Einspeisepunkt und/oder dem AC-Einspeisepunkt elektrisch verbunden, wenn ein Leistungsüberschuss am jeweiligen Einspeisepunkt anliegt, der nicht durch die Elektrolyseeinheit in Form einer Elektrolyse-Eingangsleistung aufnehmbar ist.

Das Verfahren kann vorsehen, dass eine Pflegeladung der Speicher-Batterieeinheit unabhängig von der elektrischen PV-Leistung erfolgt. Eine Pflegeladung der Speicher-Batterieeinheit wird vom prädiktiven Energiemanagement bevorzugt dann eingeleitet, wenn bis zum Sonnenuntergang mindestens ca. 85% des Ladezustand der Speicher-Batterieeinheit über die regenerative Energiequelle erreicht wird und bei Sonnenaufgang ein hoher Ziel-Ladezustand bestimmt wurde, beispielsweise weil an diesem Tag verhältnismäßig wenig regenerative Energie zu erwarten ist. Über die Brennstoffzelle wird der Energiebedarf und das notwendige Spannungsniveau für die Pflegeladung der Speicher-Batterieeinheit bereitgestellt. Der Zeitpunkt der Pflegeladung kann vom prädiktiven Energiemanagement in weiten Grenzen variiert werden und zur Kompensation negativer Effekte auf die Batterielebensdauer kann der Ziel-Ladezustand verändert werden, vorzugsweise wird bei verzögerter Pflegeladung der minimale Ladezustand der Speicher-Batterieeinheit angehoben.

In einer besonders bevorzugten Ausgestaltung des Verfahrens erfolgt das Betreiben der Brennstoffzelleneinheit aus einem 48 Volt DC-Einspeisepunkt der Hausenergieanlage, insbesondere ohne einen der Brennstoffzelleneinheit vorgeschalteten Spanungswandler. In diesem Fall wird der Wirkungsgrad der Brennstoffzelle und die Momentan-Leistung durch die aktuelle Bus-Spannung am DC-Einspeisepunkt definiert und die mittlere Leistung der Brennstoffzelle kann durch intermittierenden Betrieb in weiten Grenzen variiert werden.

Weitere vorteilhafte Ausführungen und bevorzugte Weiterbildungen der Erfindung sind den jeweiligen Unteransprüchen zu entnehmen.

Um eine Abwärme der Hausenergieanlage vorteilhaft zu nutzen, kann das Verfahren die folgenden Schritte aufweisen:
- Führen von außerhalb eines Aufenthaltsraums stammender Außenluft als direkte Zuluft zu einem Aufenthaltsraum oder als indirekte Zuluft zunächst über die Brennstoffzelleneinheit und danach zu dem Aufenthaltsraum,
- Führen von aus dem Aufenthaltsraum stammender Abluft über die Elektrolyseeinheit, insbesondere vor einem Austragen selbiger als Fortluft aus der Hausenergiezentrale.

Vorteilhafterweise weist das Verfahren die folgenden Schritte auf:
- Erzeugen einer PV-Gesamtstrommenge mittels des ersten und zweiten PV-Generators,
- Einspeisen einer durch den ersten PV-Generator erzeugten PV-Teilstrommenge in einen AC-Einspeisepunkt der Hausenergieanlage, insbesondere mittels eines PV-Wechselrichters, und Einspeisen von Überschussleistung des ersten PV-Generators in einen DC-Einspeisepunkt,
- Einspeisen einer durch den zweiten PV-Generator erzeugten PV-Teilstrommenge in einen DC-Einspeisepunkt, insbesondere mittels eines DC-DC-Solarladereglers,
- Einspeisen von Leistung vom DC-Einspeisepunkt in den AC-Einspeisepunkt über den Inselwechselrichter, wenn die Leistung des ersten PV-Generators nicht für die Gesamte AC-Last ausreicht,
- Einspeisen von Leistung vom DC-Einspeisepunkt in den Kurzzeitenergiespeicher, vorzugsweise eine Batteriespeichereinheit, und/oder in den Langzeitenergiespeicher, vorzugsweise ein System aus Brennstoffzelleneinheit, Elektrolyseeinheit und Wasserstoffspeicher.

Ausführungsbeispiele der vorliegenden Erfindung werden im Folgenden beispielhaft unter Bezugnahme auf die beigefügten Figuren erläutert. Es zeigt:
- Fig. 1: eine schematische Darstellung eines ersten Ausführungsbeispiels einer Hausenergieanlage;
- Fig. 2: eine schematische Darstellung eines zweiten Ausführungsbeispiels einer Hausenergieanlage;
- Fig. 3: eine schematische Darstellung eines dritten Ausführungsbeispiels einer Hausenergieanlage;
- Fig. 4: eine schematische Darstellung eines vierten Ausführungsbeispiels einer Hausenergieanlage;
- Fig. 5: ein erstes im Rahmen einer numerischen Simulation einer Hausenergieanlage erzeugtes Diagramm;
- Fig. 6: ein zweites im Rahmen einer numerischen Simulation einer Hausenergieanlage erzeugtes Diagramm;
- Fig. 7: eine schematische Darstellung eines Ausführungsbeispiels eines Verfahrens zum Betreiben einer Hausenergieanlage.

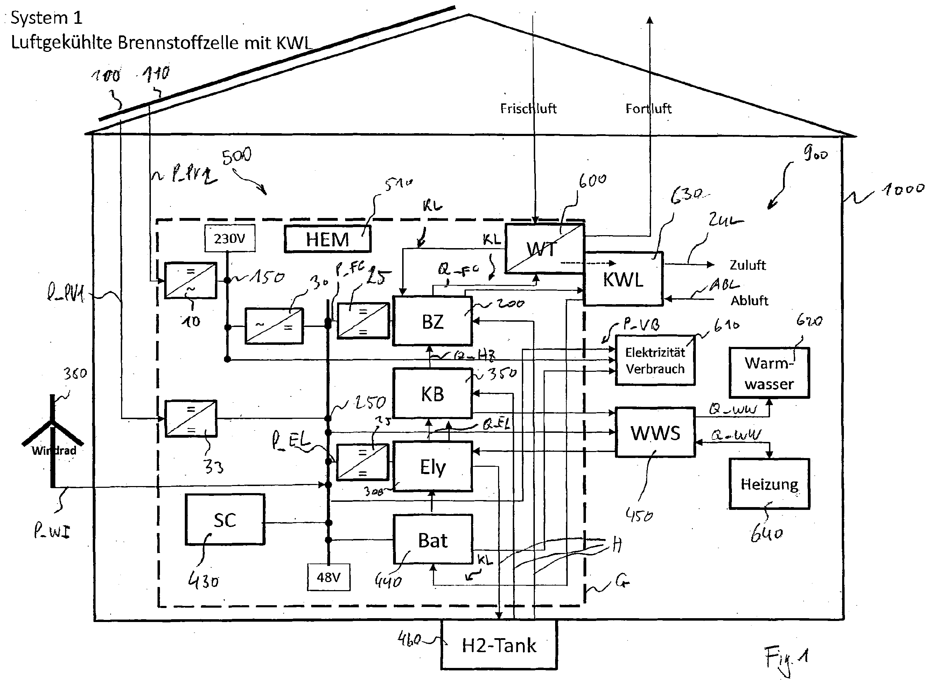

Ein Passivhaus 1000 in Fig. 1 ist mit einer erfindungsgemäßen Hausenergieanlage 500 ausgestattet, so dass das Passivhaus 1000 vollenergetisch autark und CO₂-frei betreibbar ist. Die Hausenergieanlage 500 der Fig. 1 ist "off-grid" fähig. Die Hausenergieanlage weist einen DC-Einspeisepunkt 250, ausgebildet für eine Gleichspannung von 48 Volt, und einen AC-Einspeisepunkt 150, ausgebildet für eine Wechselspannung von 230 Volt, auf.

Die Hausenergieanlage 500 weist einen auf dem Dach des Passivhauses 1000 angeordneten ersten PV-Generator 100 zur Erzeugung einer ersten elektrischen PV-Leistung P_PV1 und einen von diesem galvanisch getrennten zweiten PV-Generator 110 zur Erzeugung einer zweiten elektrischen PV-Leistung P_PV2 auf. Die Hausenergieanlage 500 weist ebenfalls eine Brennstoffzelleneinheit 200 zur Erzeugung einer elektrischen Brennstoffzellen-Leistung P_FC. Die in der vorliegenden Ausführung luftgekühlte Brennstoffzelleneinheit 200 ist mit einem zum Belüften und Beheizen eines Aufenthaltsraumes 900 ausgebildeten Lüftungs-Heiz-Gerät 630, vorliegend eine kontrollierte Wohnraumlüftung, wärmeverbunden, so dass ein Brennstoffzellen-Wärmemenge Q_FC an den Aufenthaltsraum 900 abgebbar ist. Vorliegend ist die Brennstoffzelleneinheit 200 über eine Zuluftführung ZUL mit dem zum Belüften und Beheizen des Aufenthaltsraumes 900 ausgebildeten Lüftungs-Heiz-Gerät 630 wärmeverbunden. Eine Brennstoffzellen-Wärmemenge Q_FC wird dem Lüftungs-Heiz-Gerät 630 über einen Luftstrom zugeführt und mittels eines Luftstroms dem Aufenthaltsraum 900 zugeführt.

Die Hausenergieanlage 500 weist ferner eine Elektrolyseeinheit 300 zur Erzeugung von durch die Brennstoffzelleneinheit 200 zu verbrauchendem Wasserstoff H auf, wobei die Elektrolyseeinheit 300 vorliegend mit einer elektrischen Elektrolyse-Eingangsleistung P_EL gespeist wird.

Ein Wasserstofftank 400 der Hausenergieanlage 500 dient als Langzeitenergiespeicher und ist mit der Brennstoffzelleneinheit 200 und der Elektrolyseeinheit 300 fluidverbunden. Der Wasserstofftank 400 ist zur Speicherung von mittels der Elektrolyseeinheit 300 zu erzeugendem und durch die Brennstoffzelleneinheit 200 zu verbrauchendem Wasserstoff ausgebildet.

Die Hausenergieanlage 500 weist auch eine Speicher-Batterieeinheit 440 als Kurzzeitenergiespeicher auf, diese ist elektrisch mit dem DC-Einspeisepunkt 250 verbunden. Ebenfalls elektrisch verbunden mit dem DC-Einspeisepunkt 250, zur Pufferung von Leistungsspitzen im Sekundenzeitraum, ist ein Superkondensator 430. Die Speicher-Batterieeinheit 440 ist elektrisch mit dem PV-Generator 100, der Brennstoffzelleneinheit 200, der Elektrolyseeinheit 300 und einem elektrischen Verbraucher 610, der primär AC-Verbraucher, aber optional auch DC-Verbraucher beinhalten kann und eine Verbrauchs-Leistung P_VB aufweist, verbunden. Derart ist die elektrische PV-Leistung P_PV und die elektrische Brennstoffzellen-Leistung P_FC in die Speicher-Batterieeinheit 440 einspeicherbar und die elektrische Elektrolyse-Eingangsleistung P_EL sowie die Verbrauchs-Leistung P_VB aus der Speicher-Batterieeinheit 440 entnehmbar.

Über einen Warmwasserspeicher 450, der eingangsseitig mit der flüssiggekühlten Elektrolyseeinheit 300 wärmeverbunden ist, kann eine Elektrolyse-Wärmemenge Q_EL an den Warmwasserspeicher 450 abgeben werden. Ausgangsseitig ist der Warmwasserspeicher 450 mit einem Warmwasser-Heizkreislauf 640 und einem Wasserverbraucher 620 wärmeverbunden, so dass eine Warmwasser-Wärmemenge Q_WW über den Warmwasser-heizkreislauf 640 an den Aufenthaltsraum 900, vorzugsweise über eine Fußbodenheizung (nicht eingezeichnet) und/oder über Warmwasser-Radiatoren und/oder optional über ein hydraulisches Heizregister (nicht eingezeichnet) verbunden mit der kontrollierten Wohnraumlüftung 630 und den Wasserverbraucher 620, abgebbar ist. Des Weiteren weist die Hausenergieanlage 500 einen Luft-Luft-Wärmetauscher 600 auf, der mit der Spül- und Kühlluft KL der Hausenergieanlage 500 wärmeverbunden ist und über den der größte Teil der an die Spül- und Kühlluft KL abgegebenen Abwärme der Hausenergieanlage 500 auf einen Zuluftstrom der Zuluftführung ZUL übertragen wird.

Die Hausenergieanlage 500 der Fig. 1 weist vorliegend einen Zusatz-Brenner in Form eines katalytischen Wasserstoff-Brenners 350 auf. Dieser ist ausgangsseitig mit dem Warmwasserspeicher 450 wärmeverbunden, so dass eine Heiz-Wärmemenge Q_HZ an den Warmwasserspeicher 450 abgebbar ist. Eingangsseitig ist der katalytische Wasserstoff-Brenner 350 mit dem Wasserstofftank 400 fluidverbunden und wird über selbigen mit Wasserstoff H versorgt. Alternativ kann eine Hausenergieanlage frei von einem Zusatz-Brenner in Form eines katalytischen Wasserstoff-Brenners bereitgestellt sein.

Des Weiteren weist die Hausenergieanlage 500 beispielhaft eine Kleinwindkraftanlage 380 zum Erzeugen einer elektrischen Windkraft-Leistung P_WI auf. Die Speicher-Batterieeinheit 440 ist elektrisch mit der Kleinwindkraftanlage 380 verbunden, so dass die elektrische Windkraft-Leistung P_WI in die Speicher-Batterieeinheit 440 einspeicherbar ist.

Der erste PV-Generator 100 ist über einen DC-DC Solarladeregler 33 zur unidirektionalen Einspeisung an den DC-Einspeisepunkt 250 gekoppelt. Der zweite PV-Generator 110 ist, wie in Fig. 1 dargestellt, über einen Netzwechselrichter 10 an den AC-Einspeisepunkt 150 angebunden. Der AC-Einspeisepunkt 150 und der DC-Einspeisepunkt 250 sind vorliegend über einen Inselwechselrichter 30, der in diesem Ausführungsbeispiel bidirektional ausgeführt ist, verbunden. Das in Fig. 1 gezeigte Ausführungsbeispiel zeigt auch je einen unidirektional ausgeführten DC/DC-Wandler 25 für die Brennstoffzelleneinheit 200 und Elektrolyseeinheit 300, die jedoch, insbesondere im Fall der Brennstoffzelleneinheit 200, bei bestimmten Auslegungen und Betriebsweisen wegfallen können.

Die Komponenten der Hausenergieanlage 500 werden über ein Steuermodul 510 gesteuert, das dementsprechend ausgebildet und verbunden ist. Auf dem Steuermodul 510 läuft neben der allgemeinen Betriebsführungslogik auch das hier beschriebene erfindungsgemäße Verfahren gemäß des ersten Aspekts der Erfindung. Ebenso stellt das Steuermodul 510 auch die Schnittstelle zum Kunden und über Datenfernübertragung auch zu externen Systemen, z.B. für Datenerfassung, Steuerung, Diagnose, Fernwartung und meteorologische Daten, bereit.

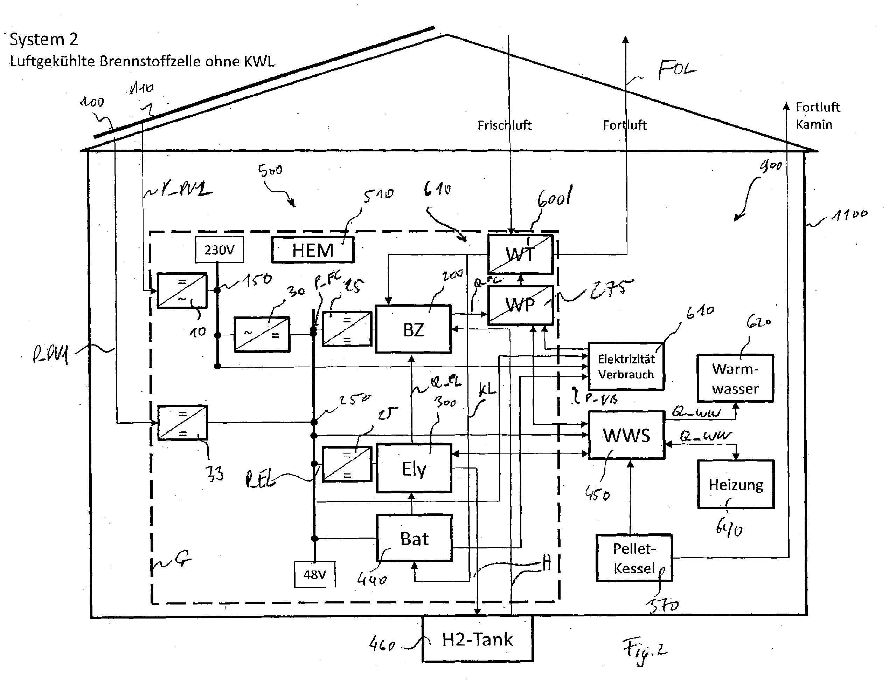

Ein Bestandsbau 1100, beispielsweise ein auf den Niedrigenergiestandard wärmetechnisch renoviertes Einfamilienhaus, in Fig. 2 ist ebenfalls mit einer Hausenergieanlage 500 ausgestattet. Im Gegensatz zu Fig. 1 ist in dem Bestandsbau 100 keine zentral kontrollierte Wohnraumlüftung installiert. In diesem Fall ist die Hausenergieanlage 500 mit einem separaten Lüftungssystem 610 für Spül- und Kühlluft KL ausgestattet. Das Lüftungssystem 610 enthält einen Gas-Gas-Wärmetauscher 600', welcher vorzugsweise als Kreuzströmer oder Kreuzgegenströmer ausgebildet ist. Die Zuluft ZUL stellt die Spül- und Kühlluft KL dar und kann über den Gas-Gas-Wärmetauscher 600' vorgewärmt werden oder über einen Bypass an diesem vorbeigeleitet werden. Nach Aufnahme der Abwärme und der H₂-haltigen Emissionen aller Komponenten im Gehäuse G der Hausenergieanlage und/oder der Kühlluft der Brennstoffzelleneinheit 200 kann die Spül- und Kühlluft KL über einen Luft-Wasser-Wärmetauscher (nicht dargestellt) oder eine Wärmepumpe 275 Wärme entzogen und in den Warmwasserspeicher 450 eingekoppelt werden. Danach kann über den Gas-Gas-Wärmetauscher 600' Restwärme auf die Zuluft ZUL übertragen werden und die Spül-und Kühlluft KL als Fortluft FOL an die Umgebung abgegeben werden. Wegen des im Allgemeinen bei Bestandsbauten 1100 höheren Wärmebedarfs liegt ein Zusatz-Brenner in Form eines Pelletkessels 370 vor, so dass der Bestandsbau 1100 elektrisch zu 100% autark und zumindest CO₂-neutral betreibbar ist. Die Hausenergieanlage 500 der Fig. 2 ist "off-grid"-fähig. Ein katalytischer Brenner auf Basis von Wasserstoff ist hier nicht vorgesehen, da der Pelletkessel 370 die Wärmebereitstellung übernehmen kann.

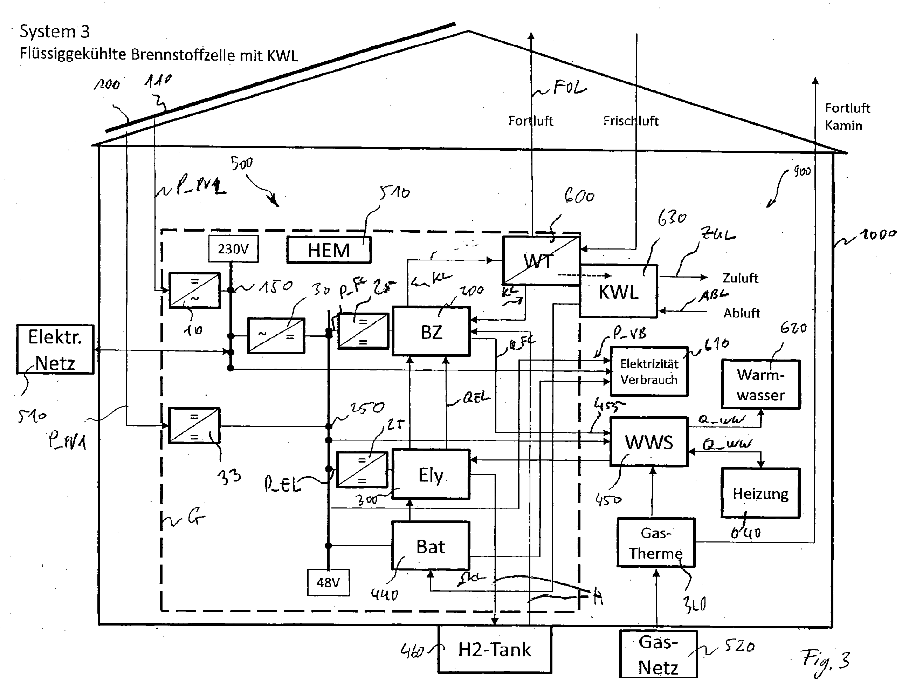

Ein Passivhaus 1000 mit kontrollierter Wohnraumlüftung 630 in Fig. 3 ist auch mit einer Hausenergieanlage 500 ausgestattet. Die Spül- und Kühlluft KL der Hausenergieanlage 500 wird analog der Ausführung von Fig. 1 geführt. Im Gegensatz zu Fig. 1 liegt eine flüssiggekühlte Brennstoffzelle 200 vor, so dass auch die Brennstoffzellen-Wärmemenge Q_FC über einen Wasserkreislauf 455 an den Warmwasserspeicher 450 abgegeben wird. Ebenfalls ist die Brennstoffzelleneinheit 200 in den Spül- und Kühlkreislauf KL eingebunden, Über den Warmwasserspeicher 450 wird eine Warmwasser-Wärmemenge Q_WW zur Nutzung als Warmwasser und für Heizzwecke bereitgestellt. Optional kann die feuchte und warme Kathodenabluft der Brennstoffzelle 200 zur direkten Wärme- und Feuchtenutzung in die Zuluft ZUL geleitet werden. In dieser Ausführung liegt beispielhaft anstelle des Katalytischen H₂-Brenners ein Zusatz-Brenner in Form einer Gastherme 360 vor, so dass das Einfamilienhaus 1000 aber zumindest elektrisch autark betreibbar ist und bei sehr guter wärmetechnischer Ausführung und entsprechend großer Auslegung der Hausenergieanlage, unter Berücksichtigung des Überschusses an elektrischer Energie, aber auch den Nullenergiestatus erreichen kann. Im Gegensatz zu Fig. 1 und 2 weist die Hausenergieanlage 500 der Fig. 3 einen optionalen elektrischen Versorgungsanschluss 510 auf, über den die Hausenergieanlage 500 an ein 230V-Niederspannungsnetz angeschlossen ist. Die Hausenergieanlage 500 der Fig. 3 weist ebenfalls einen Brennstoffanschluss 520 auf, über den die Hausenergieanlage 500, genauer gesagt die Gastherme 360, an ein Gasnetz angeschlossen ist. Alternativ kann auch, beispielsweise durch Einbau eines Pellektkessels oder einer Wärmepumpe zur Beheizung, auf einen Anschluss an das Gasnetz verzichtet werden.

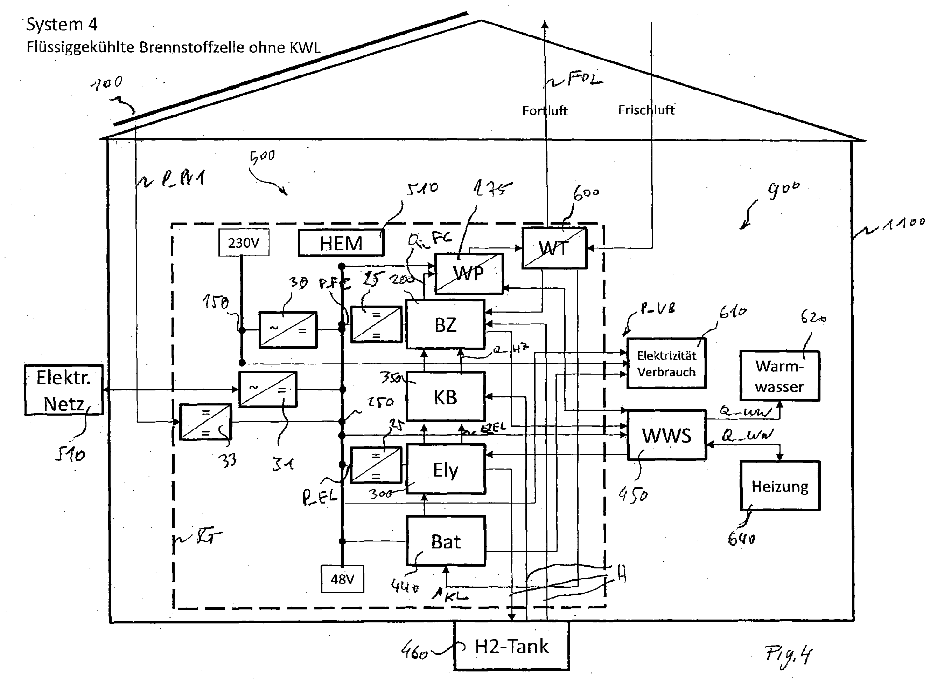

Ein Bestandsbau 1100 in Fig. 4 ist ebenfalls mit einer Hausenergieanlage 500 ausgestattet und stellt eine Variante des Systems in Fig 2 dar. Wie in Fig. 2 ist in dem Bestandsbau keine zentrale Kontrollierte Wohnraumlüftung installiert. Im Gegensatz zu Fig. 2 ist die Brennstoffzelle 200 wassergekühlt. Die Brennstoffzellen-Wärmemenge Q_BZ wird, ebenso wie die Elektrolyse-Wärmemenge Q_EL der Elektrolyseeinheit 300, über den Kühlkreislauf direkt an den Warmwasserspeicher 450 abgegeben. Die Abwärme des Spül- und Kühlluftstromes KL kann wie bei dem System von Fig. 2 vorzugsweise über eine Kleinwärmepumpe 275 in den Warmwasserspeicher 450 übertragen werden. Anstelle des katalytischen Wasserstoffbrenners kann bei höherem Wärmebedarf auch hier ein Pelletofen oder eine Gastherme genutzt werden.

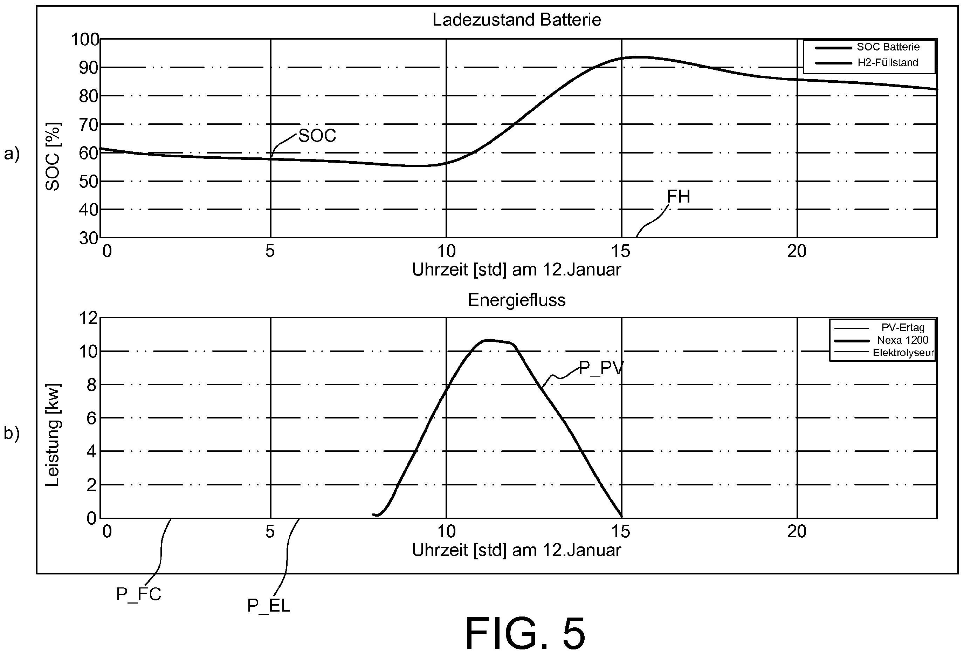

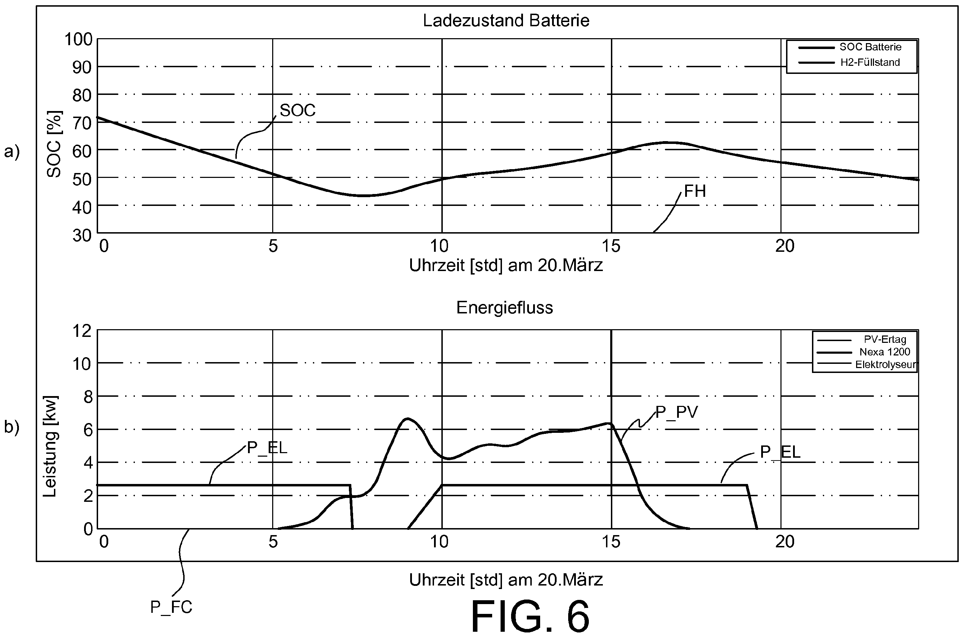

Fig. 5 zeigt ein erstes im Rahmen einer numerischen Simulation einer Hausenergieanlage erzeugtes Diagramm. Der numerischen Simulation der Fig. 5 und Fig. 6 liegt eine wie folgt dimensionierte Hausenergieanlage zugrunde:
- elektrische Brennstoffzellen-Nennleistung: 600 W bis 5000 W
- elektrische Elektrolyse-Eingangsnennleistung: 500 W bis 5000 W
- Kapazität des Wasserstofftanks: 10 kg bis 80 kg H₂
- Nenn-Betriebsdruck des Wasserstofftanks: 20 - 100 bar im Mitteldruckbereich; 100 bar bis 1000 bar im Hochdruckbereich
- Kapazität Speicher-Batterieeinheit: 150 Ah bis 1500 Ah bei 48 V Nennspannung

Fig. 5a) zeigt ein Simulationsergebnis für das Systemverhalten, bei dem die Steuerung mit den oben beschriebenen Energiemanagement-Strategien umgesetzt wurde. Dargestellt ist für einen sonnigen Wintertag im Januar der zeitliche Verlauf des Ladezustands der Speicher-Batterieeinheit sowie der Füllstand FH des Wasserstofftanks in Prozent. Fig. 5b) zeigt für den gleichen Tag den zeitlichen Verlauf der elektrischen PV-Leistung P_PV in kW, der elektrischen Brennstoffzellen-Leistung P_FC in kW und der elektrischen Elektrolyse-Eingangsleistung P_EL in kW.

Wie aus Fig. 5a) ersichtlich ist, beträgt der Ladezustand bis zum Sonnenaufgang um ca. 8 Uhr (P_PV > 0) noch wenigstens 55%. Da die in der Speicher-Batterieeinheit eingespeicherte elektrische Energie einen prognostizierten elektrischen Verbrauch P_VB' (nicht gezeigt) des Hauses bis zum Sonnenaufgang überschreitet und eine durch den PV-Generator prognostiziert erzeugbare elektrische PV-Leistung P_PV' (nicht gezeigt) jederzeit voll von der Batterie aufgenommen werden kann und ausreichend ist, die Speicher-Batterieeinheit bis zum Sonnenuntergang (P_PV = 0) auf einen Ladezustand von über 70 Prozent zu bringen, wird die Brennstoffzelleneinheit ganztägig nicht betrieben, d.h. P_FC = 0 kW und FH = 0 %.

Da eine durch den PV-Generator prognostiziert erzeugbare elektrische PV-Leistung P_PV (nicht gezeigt) nicht ausreichend ist, die Speicher-Batterieeinheit bis zum Sonnenuntergang auf einen für diesen Zeitpunkt als günstig ermittelten Ziel-Ladezustand von über 95 Prozent zu bringen, bleibt auch die Elektrolyseeinheit ganztätig inaktiv, d.h. P_EL = 0 kW.

Fig. 6 zeigt ein zweites im Rahmen einer numerischen Simulation einer Hausenergieanlage erzeugtes Diagramm. Fig. 6a) zeigt den zeitlichen Verlauf des Ladezustands der Speicher-Batterieeinheit sowie den Füllstand FH des Wasserstofftanks in Prozent. Fig. 6b) zeigt den zeitlichen Verlauf der elektrischen PV-Leistung P_PV in kW, der elektrischen Brennstoffzellen-Leistung P_FC in kW und der elektrischen Elektrolyse-Eingangsleistung P_EL in kW. Auf der horizontalen Zeitachse der Fig. 6a) und Fig. 6b) ist die Tageszeit am 20. März in Stunden aufgetragen.

Wie aus Fig. 5a) ersichtlich ist, wird die Speicher-Batterieeinheit ganztägig mit einem Ladezustand von höchstens 70 Prozent betrieben, so dass die PV-Leistung P_PV möglichst effizient in die Speicher-Batterieeinheit eingespeichert werden kann.

Da eine durch den PV-Generator prognostiziert erzeugbare elektrische PV-Leistung P_PV (nicht gezeigt) ausreichend ist, die Speicher-Batterieeinheit bis zum Sonnenuntergang auf einen Ladezustand von über 95 Prozent zu bringen, wird die Elektrolyseeinheit zeitweise aktiviert, d.h. P_EL > 0 kW.

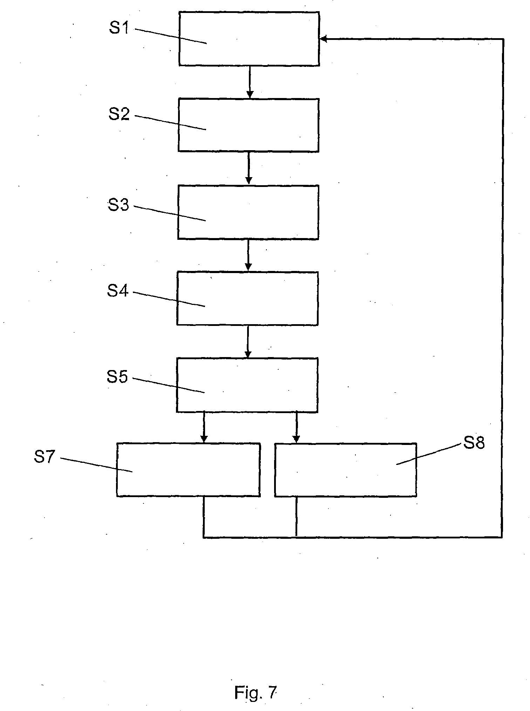

Ein beispielhaftes Verfahren zum Betreiben einer Hausenergieanlage ist in Fig. 7 dargestellt.

In einem ersten Schritt S1 erfolgt ein Ermitteln oder Vorgeben mindestens eines Erwartungszeitraums, wobei sich der mindestens eine Erwartungszeitraum bevorzugt bis zu einer erneuten Verfügbarkeit von Energie einer regenerativen Energiequelle nach dem nächstmöglichen Sonnenaufgang erstreckt.

In einem zweiten Schritt S2 erfolgt ein Ermitteln eines zu erwartenden Lastprofils eines elektrischen Verbrauchers, insbesondere dessen elektrische Verbrauchs-Leistung in dem mindestens einen Erwartungszeitraum,

In einem dritten Schritt S3 erfolgt ein Ermitteln eines zu erwartenden Ertragsprofils der regenerativen Energiequelle in dem mindestens einen Erwartungszeitraum, bevorzugt einer elektrischen PV-Leistung eines PV-Generators.

In einem vierten Schritt S4 erfolgt ein Ermitteln oder Vorgeben einer minimalen Verbrauchs-Leistung, die der Speicher-Batterieeinheit zu jedem Zeitpunkt wenigstens entnehmbar sein soll, und/oder Vorgeben einer Entladeschlussspannung der Speicher-Batterieeinheit, die zu jedem Zeitpunkt nicht unterschritten werden soll,

In einem fünften Schritt S5 erfolgt ein Ermitteln eines Zielladezustands der Speicher-Batterieeinheit (440) und einer Energiebilanz über den mindestens einen Erwartungszeitraum aus dem zu erwartenden Ertragsprofil und dem zu erwartenden Lastprofil.

In einem sechsten Schritt S6 erfolgt ein Ermitteln einer zeitlichen Reichweite der Speicher-Batterieeinheit aus dem zu erwartenden Lastprofil, dem zu erwartenden Ertragsprofil und der minimalen Verbrauchs-Leistung, die zu jedem Zeitpunkt nicht unterschritten werden soll, dem aktuell ermittelten Ziel-Ladezustand der Speicher-Batterieeinheit und bevorzugt der Entladeschlussspannung.

In einem siebten Schritt S7 erfolgt ein Betreiben der Brennstoffzelleneinheit mit einer Brennstoffzellen-Leistung in Abhängigkeit der ermittelten zeitlichen Reichweite der Speicher-Batterieeinheit, insbesondere Einschalten der Brennstoffzelleneinheit, wenn die ermittelte zeitliche Reichweite der Speicher-Batterieeinheit kürzer als der mindestens eine Erwartungszeitraum ist und/oder Ausschalten der Brennstoffzelleneinheit, wenn die ermittelte zeitliche Reichweite der Speicher-Batterieeinheit länger als der mindestens eine Erwartungszeitraum ist,

In einem achten Schritt S8, der parallel zu dem siebten Schritt S7 durchgeführt werden kann, erfolgt ein Betreiben der Elektrolyseeinheit, insbesondere mit einer berechneten Elektrolyse-Leistung, in Abhängigkeit der ermittelten Energiebilanz, insbesondere Einschalten der Elektrolyseeinheit, wenn die ermittelte Energiebilanz positiv ist und/oder Ausschalten der Elektrolyseeinheit, wenn die ermittelte Energiebilanz negativ ist.

Das erfindungsgemäße Verfahren zum Betreiben einer Hausenergieanlage des Ausführungsbeispiels der Fig. 7 wird im Anschluss an den siebten Schritt S7 und/oder achten Schritt S8, beginnend mit dem ersten Schritt S1, rekursiv ausgeführt.

## Patentansprüche

1. Verfahren zum Betreiben einer Hausenergieanlage zur autarken elektrischen Versorgung und bevorzugt zur CO2-neutralen autarken Wärmebereitstellung, vorzugsweise für Ein- und Zweifamilienhäuser, wobei die Hausenergieanlage Speicher-Batterieeinheit (440), eine Brennstoffzelleneinheit (200), eine Elektrolyseeinheit (300) zur Erzeugung von durch die Brennstoffzelleneinheit (200) zu verbrauchendem Wasserstoff und einen Wasserstofftank (400) aufweist, der als Langzeitenergiespeicher dient und mit der Brennstoffzelleneinheit (200) und der Elektrolyseeinheit (300) fluidverbunden ist, wobei das Verfahren die folgenden Schritte aufweist:
- (S1) Ermitteln oder Vorgeben mindestens eines Erwartungszeitraums, wobei sich der mindestens eine Erwartungszeitraum mindestens bis zu einer erneuten Verfügbarkeit von Energie einer regenerativen Energiequelle nach dem nächstmöglichen Sonnenaufgang erstreckt,
- (S2) Ermitteln eines zu erwartenden Lastprofils eines elektrischen Verbrauchers (610), insbesondere dessen elektrische Verbrauchs-Leistung (P_VB) in dem mindestens einen Erwartungszeitraum,
- (S3) Ermitteln eines zu erwartenden Ertragsprofils der regenerativen Energiequelle in dem mindestens einen Erwartungszeitraum, bevorzugt einer elektrischen PV-Leistung (P_PV) eines PV-Generators (100),
- (S4) Ermitteln oder Vorgeben einer minimalen Verbrauchs-Leistung (V_VB), die der Speicher-Batterieeinheit (440) zu jedem Zeitpunkt wenigstens entnehmbar sein soll, und/oder Vorgeben einer Entladeschlussspannung der Speicher-Batterieeinheit (440), die zu jedem Zeitpunkt nicht unterschritten werden soll,
- (S5) Ermitteln eines Ziel-Ladezustands der Speicher-Batterieeinheit (440) und Ermitteln einer Energiebilanz über den mindestens einen Erwartungszeitraum aus dem zu erwartenden Ertragsprofil und dem zu erwartenden Lastprofil,
- (S6) Ermitteln einer zeitlichen Reichweite der Speicher-Batterieeinheit (440) aus dem zu erwartenden Lastprofil, dem zu erwartenden Ertragsprofil und der minimalen Verbrauchs-Leistung, die zu jedem Zeitpunkt nicht unterschritten werden soll, einem aktuell ermittelten Ladezustand der Speicher-Batterieeinheit (440) und bevorzugt der Entladeschlussspannung,
- (S7) Betreiben der Brennstoffzelleneinheit (200) mit einer Brennstoffzellen-Leistung (P_FC) in Abhängigkeit der ermittelten zeitlichen Reichweite der Speicher-Batterieeinheit (440), insbesondere Einschalten der Brennstoffzelleneinheit (200), wenn die ermittelte zeitliche Reichweite der Speicher-Batterieeinheit (440) kürzer als der mindestens eine Erwartungszeitraum ist und/oder Ausschalten der Brennstoffzelleneinheit (200), wenn die ermittelte zeitliche Reichweite der Speicher-Batterieeinheit (440) länger als der mindestens eine Erwartungszeitraum ist.
- (S8) Betreiben der Elektrolyseeinheit (300), insbesondere mit einer berechneten Elektrolyse-Leistung (P_EL), in Abhängigkeit der ermittelten Energiebilanz, nämlich Einschalten der Elektrolyseeinheit (300), wenn die ermittelte Energiebilanz positiv ist und Ausschalten der Elektrolyseeinheit (300), wenn die ermittelte Energiebilanz negativ ist.

2. Verfahren nach wenigstens einem der vorangehenden Ansprüche, wobei die Brennstoffzelleneinheit (200) leistungsgesteuert betrieben wird, insbesondere in Abhängigkeit von der ermittelten Energiebilanz.

3. Verfahren nach wenigstens einem der vorangehenden Ansprüche, wobei bei der Vorgabe der Brennstoffzellen-Leistung (P_FC) auch Zeitpunkt und Höhe eines Heizenergiebedarfs eines durch die Hausenergieanlage versorgten Hauses einfließt.

4. Verfahren nach wenigstens einem der vorangehenden Ansprüche, wobei die Brennstoffzelleneinheit (200) wenigstens solange betrieben wird, bis die Speicher-Batterieeinheit (440) einen vorgegebenen oder jeweils neu berechneten Ziel-Ladezustand erreicht hat.

5. Verfahren nach wenigstens einem der vorangehenden Ansprüche, wobei die Elektrolyseeinheit (300) leistungsgesteuert betrieben wird, insbesondere in Abhängigkeit von der ermittelten Energiebilanz.

6. Verfahren nach wenigstens einem der vorangehenden Ansprüche, wobei die Brennstoffzelleneinheit (200) bedarfsweise intermittierend betrieben wird, bevorzugt derart, dass die Zeiten im Standby jeweils weniger als 10 Minuten betragen.

7. Verfahren nach wenigstens einem der vorangehenden Ansprüche, wobei die Elektrolyseeinheit (300) im Wirkungsgradoptimum betrieben wird, wenn am Ende des kurzfristigen Erwartungszeitraums der Ziel-Ladezustand der Speicher-Batterieeinheit (440) erreichbar ist und die regenerativ erzeugte Leistung über den elektrischen Verbrauch und/oder die Speicher-Batterieeinheit (440) und/oder den thermischen Speicher jederzeit genutzt werden kann und/oder die Elektrolyseeinheit (300) im Wirkungsgradoptimum betrieben wird, wenn die ermittelte Energiebilanz kleiner gleich 0 ist, so dass die Elektrolyseeinheit (300) zumindest zeitweise aus der Speicher-Batterieeinheit (440) zu betreiben ist.

8. Verfahren nach wenigstens einem der vorangehenden Ansprüche, wobei die Elektrolyseeinheit (300) zum Load Levelling leistungsgesteuert betrieben wird, insbesondere in Abhängigkeit vom Füllstand des Wasserstofftanks (400) und/oder der Energiebilanz.

9. Verfahren nach wenigstens einem der vorangehenden Ansprüche, wobei ein im Warmwasserspeicher (450) angeordneter Heizstab mit dem DC-Einspeisepunkt und/oder dem AC-Einspeisepunkt elektrisch verbunden wird, wenn ein Leistungsüberschuss am jeweiligen Einspeisepunkt anliegt, der nicht durch die Elektrolyseeinheit (300) in Form einer Elektrolyse-Eingangsleistung aufnehmbar ist.

10. Verfahren nach wenigstens einem der vorangehenden Ansprüche, wobei einer Pflegeladung der Speicher-Batterieeinheit (440) vorzugsweise eine Ladung bis auf mindestens ca. 85% durch regenerative Quellen vorangeht, der Zeitpunkt für die Initiierung der Pflegeladung über das prädiktive Energiemanagement flexibel bestimmt wird und danach die Pflegeladung unabhängig von der Verfügbarkeit regenerativer Energie über die Brennstoffzelleneinheit (200) erfolgt.

11. Verfahren nach wenigstens einem der vorangehenden Ansprüche, wobei das Betreiben der Brennstoffzelleneinheit aus einem 48 Volt DC-Einspeisepunkt der Hausenergieanlage erfolgt, insbesondere ohne einen der Brennstoffzelleneinheit vorgeschalteten Spannungswandler.

12. Hausenergieanlage (500) zur autarken elektrischen Versorgung und bevorzugt zur CO2-neutralen, autarken Wärmebereitstellung, vorzugsweise für Ein- und Zweifamilienhäuser mit
- einem DC-Einspeisepunkt (250), bevorzugt ausgebildet für eine Nennspannung von 48 Volt und/oder einem AC-Einspeisepunkt (150), bevorzugt ausgebildet für eine Nennspannung von 230 Volt oder 110 Volt, wobei der DC-Einspeisepunkt (250) und/oder der AC-Einspeisepunkt (150) im Betrieb zumindest zeitweise mit einem elektrischen Verbraucher (610), der eine Verbrauchs-Leistung (P_VB) aufweist, verbunden ist,
- einem elektrisch mit dem DC-Einspeisepunkt (250) und/oder AC-Einspeisepunkt (150) wenigstens zeitweise verbundenen PV-Generator (100) zum Erzeugen einer elektrischen PV-Leistung (P_PV) und/oder wenigstens zeitweise verbundenen Windenergieanlage und/oder wenigstens zeitweise verbundenen anderen Anlage zur Erzeugung von Energie aus regenerativen Quellen.,
- einer elektrisch mit dem DC-Einspeisepunkt (250) wenigstens zeitweise verbundenen Brennstoffzelleneinheit (200) zum Erzeugen einer elektrischen Brennstoffzellen-Leistung (P_FC),
- einer elektrisch mit dem DC-Einspeisepunkt (250) verbundenen Elektrolyseeinheit (300) zum Erzeugen von durch die Brennstoffzelleneinheit (200) zu verbrauchendem Wasserstoff, wobei die Elektrolyseeinheit (300) im Betrieb mit einer elektrischen Elektrolyse-Eingangsleistung (P_EL) gespeist wird,
- einem Wasserstofftank (400), insbesondere als Langzeitenergiespeicher, der mit der Brennstoffzelleneinheit (200) und der Elektrolyseeinheit (300) wenigstens zeitweise fluidverbunden ist und zum Speichern von mittels der Elektrolyseeinheit (300) zu erzeugendem und durch die Brennstoffzelleneinheit (200) zu verbrauchendem Wasserstoff ausgebildet ist,
- einer Speicher-Batterieeinheit (440), insbesondere als Kurzzeitenergiespeicher, die elektrisch mit dem DC-Einspeisepunkt verbunden oder zu verbinden ist, so dass eine elektrische PV-Leistung (P_PV) und eine elektrische Brennstoffzellen-Leistung (P_FC) in die Speicher-Batterieeinheit (440) eingespeichert werden kann und eine elektrische Elektrolyse-Eingangsleistung (P_EL) und eine Verbrauchs-Leistung (V_VB) aus der Speicher-Batterieeinheit (440) entnommen werden können; und
- mit einem Steuermodul (510), eingerichtet zum Steuern der Hausenergieanlage (500) nach einem Verfahren nach wenigstens einem der vorangehenden Ansprüche.

13. Hausenergieanlage (500) nach Anspruch 12 mit
- einem thermischen Speicher, vorzugsweise einem Warmwasserspeicher (450) insbesondere vorzugsweise als Schichtspeicher, der eingangsseitig mit der Elektrolyseeinheit (300) und/oder mit der Brennstoffzelleneinheit (200) und/oder einem Katalytischen H₂-Brenner wenigstens zeitweise wärmeverbunden ist, so dass eine Elektrolyse-Wärmemenge (Q_EL) und/oder eine Brennstoffzellen-Wärmemenge (Q_BZ) und/oder eine Wärmemenge eines Katalytischen H₂-Brenners (Q_KB) an den thermischen Speicher abgegeben werden kann, und der ausgangsseitig bevorzugt mit einer Warmwasserheizung und/oder einem Wasserverbraucher (620) wenigstens zeitweise wärmeverbunden ist, so dass eine Warmwasser-Wärmemenge (Q_WW) an den Aufenthaltsraum (900) und/oder den Wasserverbraucher (620) abgegeben werden kann, und der bevorzugt einen Heizstab aufweist, der elektrisch mit dem DC-Einspeisepunkt (250) und/oder AC-Einspeisepunkt (150) wenigstens zeitweise verbunden ist.

14. Hausenergieanlage (500) nach Anspruch 12 oder 13, wobei die Brennstoffzelleneinheit (200) mit einem zum Belüften und/oder Beheizen eines Aufenthaltsraumes (900) ausgebildeten Lüftungs-Heiz-Gerät (630) wärmeverbunden oder wärmeverbindbar ist, so dass eine Brennstoffzellen-Wärmemenge (Q_FC) an den Aufenthaltsraum (900) abgebbar ist und/oder die Brennstoffzelleneinheit (200) über eine Kühlflüssigkeitsleitung mit dem zum Belüften und/oder Beheizen des Aufenthaltsraumes (900) ausgebildeten Lüftungs-Heiz-Gerät (630) und/oder dem Warmwasserspeicher (450) wärmeverbunden oder wärmeverbindbar ist.

15. Hausenergieanlage (500) nach wenigstens einem der Ansprüche 12 bis 14, weiter aufweisend einen Luft-Luft-Wärmetauscher (600), der mit der Lüftung/Spülung der Elektrolyseeinheit (300) und/oder der Brennstoffzelleneinheit (200) und/oder des Batteriespeichers und/oder der Leistungselektronik und/oder des katalytischen Brenners wenigstens zeitweise wärmeverbunden ist und über den die gesammelte Abwärme der verbundenen Module (Q_Module) an den Aufenthaltsraum (900) abgebbar ist.

## Claims

1. A method for operating a domestic energy generation installation for self-sufficient electricity supply, and preferably for CO2-neutral, self-sufficient heating provision, primarily for detached and semi-detached houses, wherein said domestic energy generation installation has a storage battery unit (440), a fuel cell unit (200), an electrolysis unit (300) for producing hydrogen to be used by the fuel cell unit (200), and a hydrogen tank (400) which serves as a long-term energy storage device and is fluidly connected to the fuel cell unit (200) and to the electrolysis unit (300), wherein said method includes the steps of:
- (S1) determining or prespecifying at least one expectation period, said at least one expectation period extending at least to a point in time at which energy from a regenerative energy source will become available again after the next possible sunrise,
- (S2) determining an expected load profile of an electricity consumer (610), in particular its amount of consumable electric power (P_VB) required during said at least one expectation period,
- (S3) determining an expected yield profile of the regenerative energy source during the at least one expectation period, preferably an electrical PV power (P_PV) derived from a PV generator (100),
- (S4) determining or prespecifying a minimum amount of consumable power (V_VB) which should at least be available for withdrawal from the storage battery unit (440) at any given point in time, and/or prespecifying an end-of-discharge voltage of the storage battery unit (440) which should not be undershot at any given point in time,
- (S5) determining a target state of charge of the storage battery unit (440), and determining an energy balance over the at least one expectation period from the expected yield profile and the expected load profile,
- (S6) determining a time range of the storage battery unit (440) from the expected load profile, the expected yield profile and the minimum amount of consumable power which should not be undershot at any time, from a currently determined state of charge of the storage battery unit (440) and, preferably, from the end-of-discharge voltage,
- (S7) operating the fuel cell unit (200) with an amount of power to be provided by the fuel cells (P_FC) which depends on the determined time range of the storage battery unit (440), in particular, switching on the fuel cell unit (200) if the determined time range of the storage battery unit (440) is shorter than the at least one expectation period, and/or switching off the fuel cell unit (200) if the determined time range of the storage battery unit (440) is longer than the at least one expectation period,
- (S8) operating the electrolysis unit (300), in particular with a calculated power for electrolysis (P_EL), depending on the determined energy balance, in particular, switching on the electrolysis unit (300) if the determined energy balance is positive, and switching off the electrolysis unit (300) if the determined energy balance is negative.

2. The method as claimed in at least one of the preceding claims, wherein the fuel cell unit (200) is operated in a power-controlled manner, depending, in particular, on the determined energy balance.

3. The method as claimed in at least one of the preceding claims, wherein a level of heating energy required by a house powered by said domestic energy generation installation at any given time will also enter into consideration for the predefinition of the amount of power to be provided by the fuel cells (P_FC).

4. The method as claimed in at least one of the preceding claims, wherein the fuel cell unit (200) is operated at least until the storage battery unit (440) has reached a target state of charge which may be predefined beforehand or recalculated at given intervals.

5. The method as claimed in at least one of the preceding claims, wherein the electrolysis unit (300) is operated in a power-controlled manner, depending, in particular, on the determined energy balance.

6. The method as claimed in at least one of the preceding claims, wherein the fuel cell unit (200) is operated intermittently as required, preferably in such a manner that individual periods of standby will each be respectively shorter than 10 minutes.

7. The method as claimed in at least one of the preceding claims, wherein the electrolysis unit (300) is operated at optimum efficiency if at the end of the short-term expectation period the target state of charge of the storage battery unit (440) may be achieved and the power produced in a regenerative way is available for use at any point in time via electricity consumption and/or the storage battery unit (440) and/or the thermal storage device, and/or wherein the electrolysis unit (300) is operated at optimum efficiency if the determined energy balance is less than or equal to 0, such that the electrolysis unit (300) is to be operated, at least intermittently, using power drawn from the storage battery unit (440).

8. The method as claimed in at least one of the preceding claims, wherein the electrolysis unit (300) is operated in a power-controlled manner for load levelling purposes, depending, in particular, on the filling level of the hydrogen tank (400) and/or on the energy balance.

9. The method as claimed in at least one of the preceding claims, wherein a heating rod deposed in the hot water storage tank (450) will be electrically connected to the DC feed-in point and/or to the AC feed-in point if a power surplus exists at either of the respective feed-in points which cannot be absorbed by the electrolysis unit (300) in the form of an input power for electrolysis.

10. The method as claimed in at least one of the preceding claims, wherein a maintenance charging of the storage battery unit (440) is preferably preceded by a charging operation to a level of at least approximately 85 % via regenerative sources, the point in time for initiating maintenance charging is determined in a flexible manner using the predictive energy management system, and maintenance charging is subsequently performed regardless of the availability of regenerative energy via the fuel cell unit (200).

11. The method as claimed in at least one of the preceding claims, wherein the operation of the fuel cell unit is performed through a 48 volt DC feed-in point of the domestic energy generation installation, in particular without the presence of a voltage converter upstream of the fuel cell unit.

12. A domestic energy generation installation (500) for self-sufficient electricity supply and preferably for CO₂-neutral, self-sufficient heating provision, primarily for detached and semi-detached houses, including
- a DC feed-in point (250), preferably configured for a nominal voltage of 48 volt, and/or an AC feed-in point (150) preferably configured for a nominal voltage of 230 volt or 110 volt, wherein, during operation, the DC feed-in point (250) and/or the AC feed-in point (150) are at least intermittently connected to an electricity consumer (610) drawing a given amount of consumable power (P_VB),
- a PV generator (100) which is at least intermittently electrically connected to the DC feed-in point (250) and/or to the AC feed-in point (150) for generating an electric PV power, and/or a wind energy installation which is at least intermittently connected thereto, and/or another installation for generating energy from regenerative sources which is at least intermittently connected thereto,
- a fuel cell unit (200) which is at least intermittently electrically connected to the DC feed-in point (250) for generating an amount of electric power to be provided by the fuel cells (P_FC),
- an electrolysis unit (300) electrically connected to the DC feed-in point (250) for generating hydrogen to be consumed by the fuel cell unit (200), said electrolysis unit (300) being supplied, when in use, with electric input power for electrolysis (P_EL),
- a hydrogen tank (400), serving in particular as a long-term energy storage device, which is at least intermittently fluidly connected to the fuel cell unit (200) and to the electrolysis unit (300) and which is configured for storing hydrogen to be generated via the electrolysis unit (300) and to be consumed by the fuel cell unit (200),
- a storage battery unit (440), serving in particular as a short-term energy storage device, which is connected, or connectible, to the DC feed-in point, such that an amount of electric PV power (P_PV) and an amount of electric power provided by fuel cells (P_FC) can be fed into the storage battery unit (440), and an electric input power for electrolysis (P_EL) as well as an amount of consumable power (V_VB) can be drawn from the storage battery unit (440); and
- a control module (510) configured for controlling the domestic energy generation installation (500) in accordance with any method as claimed in at least one of the preceding claims.

13. The domestic energy generation installation (500) as claimed in claim 12, including
- a thermal storage unit, preferably a hot water storage tank (450), realised, in particular, as a stratified storage tank, which, at the input side, is at least intermittently thermally connected to the electrolysis unit (300) and/or to the fuel cell unit (200) and/or to a catalytic H2 burner, such that a quantity of heat derived from electrolysis (Q_EL) and/or a quantity of heat derived from fuel cells (Q_BZ) and/or a quantity of heat derived from a catalytic H2 burner (Q_KB) can be transferred into the thermal storage device, and which, at the output side, is preferably, at least intermittently, thermally connected to a hot water heating system and/or to a water consumer (620), such that a quantity of heat derived from hot water (Q_WW) can be released into the living area (900) and/or transmitted to the water consumer (620), the latter having preferably a heating rod, which is, at least intermittently, electrically connected to the DC feed-in point (250) and/or to the AC feed-in point (150).

14. The domestic energy generation installation (500) as claimed in claim 12 or 13, wherein the fuel cell unit (200) is thermally connected, or thermally connectible, to a heating and ventilation device (630) configured to heat and/or ventilate a living area (900), such that a quantity of heat derived from fuel cells (Q_FC) can be released into the living area (900), and/or wherein the fuel cell unit (200) is thermally connected, or thermally connectible, to the heating and ventilation device (630) configured for heating and/or ventilating the living space (900), and/or to the hot water storage tank (450), via a coolant line.

15. The domestic energy generation installation (500) as claimed in at least one of claims 12 to 14, further including an air-to-air heat exchanger (600) which is, at least intermittently, thermally connected to the ventilation and flushing system of the electrolysis unit (300) and/or the fuel cell unit (200) and/or the battery storage unit and/or the power electronics and/or the catalytic burner, and via which the collected exhaust heat from the connected modules (Q_Module) can be released into the living area (900).

## Revendications

1. Procédé pour faire fonctionner une installation de production d'énergie domestique pour l'alimentation en électricité en autarcie et, de préférence, pour mettre à disposition de la chaleur en autarcie de manière neutre en CO2, de préférence pour des pavillons à une famille et à deux familles, dans lequel l'installation de production d'énergie domestique a un groupe (440) de batterie d'accumulateur, un groupe (200) de pile à combustible, un groupe (300) d'électrolyse, pour la production d'hydrogène à consommer par le groupe (200) de pile à combustible, et un réservoir (400) d'hydrogène, qui sert d'accumulateur d'énergie de longue durée et qui communique fluidiquement avec le groupe (200) de pile à combustible et avec le groupe (300) d'électrolyse, dans lequel le procédé a les stades suivants :
- (S1) on détermine ou on prescrit au moins un laps de temps escompté, dans lequel le au moins un laps de temps escompté s'étend au moins jusqu'à une disponibilité renouvelée d'énergie d'une source d'énergie régénérative après le lever du soleil le plus prochain possible,
- (S2) on détermine un profil de charge à escompter d'un consommateur (610) électrique, notamment sa puissance (P_VB) de consommation électrique dans le au moins un laps de temps escompté,
- (S3) on détermine un profil de rendement à escompter de la source d'énergie régénérative dans le au moins un laps de temps escompté, de préférence une puissance (P_PV) PV électrique d'un générateur (100) PV,
- (S4) on détermine ou on prescrit une puissance (V_VB) de consommation minimum, qui doit être prélevée au moins, à chaque instant, du groupe (440) de batterie d'accumulateur et/ou on prescrit une tension finale de décharge du groupe (440) de batterie d'accumulateur, en-dessous de laquelle on ne doit pas passer à chaque instant,
- (S5) On détermine un état de charge cible du groupe (440) de batterie d'accumulateur et on détermine un bilan énergétique sur le au moins un laps de temps escompté à partir du profil de rendement à escompter et du profil de charge à escompter,
- (S6) on détermine une autonomie temporelle du groupe (440) de batterie d'accumulateur à partir du profil de charge à escompter, du profil de rendement à escompter et de la puissance de consommation minimum en-dessous de laquelle on ne doit pas passer à chaque instant, d'un état de charge déterminé en cours du groupe (440) de batterie d'accumulateur et, de préférence, de la tension finale de décharge,
- (S7) on fait fonctionner le groupe (200) de pile à combustible à une puissance (P_FC) de pile à combustible en fonction de l'autonomie temporelle déterminée du groupe (440) de batterie d'accumulateur, notamment on met en circuit le groupe (200) de pile à combustible, si l'autonomie temporelle déterminée du groupe (440) de batterie d'accumulateur est plus courte que le au moins un laps de temps escompté et/ou on met hors-circuit le groupe (200) de pile à combustible, si l'autonomie temporelle déterminée du groupe (440) de batterie d'accumulateur est plus longue que le au moins un laps de temps escompté,
- (S8) on fait fonctionner le groupe (300) d'électrolyse, notamment à une puissance (P_EL) d'électrolyse calculée, en fonction du bilan énergétique déterminé, à savoir on met en circuit le groupe (300) d'électrolyse, si le bilan, énergétique déterminé est positif et on met le groupe (300) d'électrolyse hors circuit, si le bilan énergétique déterminé est négatif.

2. Procédé suivant au moins l'une des revendications précédentes, dans lequel on fait fonctionner commandé en puissance le groupe (200) de pile à combustible, notamment en fonction du bilan énergétique déterminé.

3. Procédé suivant au moins l'une des revendications précédentes, dans lequel, lors de la prescription de la puissance (P-FC) de pile à combustible, entrent aussi l'instant et le niveau d'un besoin d'énergie de chauffage d'une maison alimentée par l'installation de production d'énergie domestique.

4. Procédé suivant au moins l'une des revendications précédentes, dans lequel on fait fonctionner le groupe (200) de pile à combustible jusqu'à ce que le groupe (440) de batterie d'accumulateur à atteint un état de charge cible donné à l'avance ou respectivement calculé à nouveau.

5. Procédé suivant au moins l'une des revendications précédentes, dans lequel on fait fonctionner commandé en puissance le groupe (300) d'électrolyse, notamment en fonction du bilan énergétique déterminé.

6. Procédé suivant au moins l'une des revendications précédentes, dans lequel on fait fonctionner le groupe (200) de pile à combustible en cas de besoin par intermittence, de préférence de manière à ce que les temps en standby soient respectivement plus petits que dix minutes.

7. Procédé suivant au moins l'une des revendications précédentes, dans lequel on fait fonctionner l'unité (300) d'électrolyse en optimum de rendement si, à la fin du laps de temps escompté à bref délai, l'état de charge cible du groupe (440) de batterie d'accumulateur est atteignable et si la puissance produite de manière régénérative peut être utilisée à tout moment par la consommation électrique et/ou par le groupe (440) de batterie d'accumulateur et/ou par l'accumulateur thermique et/ou on fait fonctionner le groupe (300) d'électrolyse en optimum de rendement si le bilan énergétique déterminé est inférieur ou égal à zéro, de manière à ce que le groupe (300) d'électrolyse puisse fonctionner au moins de temps en temps à partir du groupe (440) de batterie d'accumulateur.

8. Procédé suivant au moins l'une des revendications précédentes, dans lequel on fait fonctionner commandé en puissance le groupe (300) d'électrolyse pour le load levelling, notamment en fonction du niveau du réservoir (400) d'hydrogène et/ou du bilan énergétique.

9. Procédé suivant au moins l'une des revendications précédentes, dans lequel on relie électriquement une baguette chauffante, disposée dans un accumulateur (150) d'eau chaude, au point d'injection de courant continu et/ou au point d'injection du courant alternatif, s'il y a un excès de puissance aux points d'injection respectifs, qui ne peut pas être absorbé par le groupe (300) d'électrolyse sous la forme d'une puissance d'entrée d'électrolyse.

10. Procédé suivant au moins l'une des revendications précédentes, dans lequel on fait précéder, à une charge d'entretien du groupe (440) de batterie d'accumulateur, de préférence une charge jusqu'à au moins environ 85% par des sources régénératives, on détermine de manière souple par la gestion d'énergie prédictive l'instant du commencement de la source d'entretien et ensuite la charge d'entretien s'effectue par le groupe (200) de pile à combustible, indépendamment de la disponibilité de l'énergie régénérative.

11. Procédé suivant au moins l'une des revendications précédentes, dans lequel le fonctionnement du groupe de pile à combustible s'effectue à partir d'un point d'injection de courant continu de 48 volt de l'installation de production d'énergie domestique, notamment sans un convertisseur de tension monté en amont du groupe de pile à combustible.

12. Installation (500) de production d'énergie domestique pour l'alimentation en électricité en autarcie et, de préférence, pour la mise à disposition en autarcie de chaleur de manière neutre en CO2, de préférence pour des pavillons à une famille et à deux familles, comprenant
- un point (250) d'injection de courant continu, constitué de préférence pour une tension nominale de 48 volt et/ou un point (150) d'injection de courant alternatif, constitué de préférence pour une tension nominale de 230 volt ou 210 volt, le point (250) d'injection de courant continu et/ou le point (150) d'injection de courant alternatif étant relié en fonctionnement, au moins de temps en temps, à un consommateur (610) électrique, qui a une puissance (P_VB) de consommation,
- un générateur (100) PV relié au moins de temps en temps électriquement au point (250) d'injection de courant continu et/ou au point (150) d'injection de courant alternatif pour la production d'une puissance (P_PV) électrique et/ou à une installation éolienne reliée au moins de temps en temps et/ou à une autre installation reliée au moins de temps en temps pour la production d'énergie à partir de sources régénératives,
- un groupe (200) de pile à combustible relié au moins de temps en temps électriquement au point (250) d'injection de courant continu pour la production d'une puissance (P_FC) électrique de pile à combustible.
- un groupe (300) d'électrolyse relié électriquement au point (250) d'injection de courant continu, pour la production d'hydrogène à consommer par le groupe (200) de piles à combustible, le groupe (300) d'électrolyse étant en fonctionnement alimenté à une puissance (P_EL) électrique d'entrée d'électrolyse,
- un réservoir (400) d'hydrogène, notamment sous la forme d'un réservoir d'énergie de longue durée, qui communique physiquement au moins de temps en temps avec le groupe (200) de piles à combustible et avec le groupe (300) d'électrolyse et qui est constitué pour emmagasiner de l'hydrogène à produire au moyen du groupe (300) d'électrolyse et à consommer par le groupe (200) de piles à combustible,
- un groupe (440) de batterie d'accumulateur, notamment sous la forme d'un accumulateur d'énergie à brève durée, qui est relié électriquement au point d'injection de courant continu ou qui peut l'être de manière à pouvoir injecter une puissance (P_PV) PV électrique et une puissance (P_FC) électrique de piles à combustible dans le groupe (440) de batterie d'accumulateur et de manière à pouvoir prélever une puissance (P_EL) électrique d'entrée d'électrolyse et une puissance (V_VB) de consommation du groupe (440) de batterie d'accumulateur ; et
- comprenant un module (510) de commande conçu pour commander l'installation (500)de production d'énergie domestique selon un procédé suivant au moins l'une des revendications précédentes.

13. Installation (500) de production d'énergie domestique suivant la revendication 12, comprenant
- un accumulateur thermique, de préférence un accumulateur (450) d'eau chaude, de préférence notamment sous la forme d'un accumulateur à couche, qui est relié calorifiquement au moins de temps en temps du côté de l'entrée au groupe (300) d'électrolyse et/ou au groupe (200) de pile à combustible et/ou à un brûleur d'H₂ catalytique, de manière à pouvoir céder à l'accumulateur thermique une quantité (Q_EL) de chaleur d'électrolyse et/ou une quantité (Q_BZ) de chaleur de piles à combustible et/ou une quantité de chaleur d'un brûleur (Q_KB) d'H₂ catalytique, et qui est relié calorifiquement au moins de temps en temps du côté de la sortie, de préférence à un chauffage d'eau chaude et/ou à un consommateur (620) d'eau, de manière à pouvoir céder une quantité (Q_WW) de chaleur d'eau chaude à la salle (900) de séjour et/ou au consommateur (620) d'eau et qui a de préférence une baguette de chauffage, qui est reliée au moins de temps en temps électriquement au point (250) d'injection de courant continu et/ou au point (150) d'injection de courant alternatif.

14. Installation (500) de production d'énergie domestique suivant la revendication 12 ou 13, dans laquelle le groupe (200) de pile) à combustible est relié calorifiquement à un appareil (630) de chauffage par ventilation constitué pour ventiler et/ou chauffer une salle (900) de séjour ou peut l'être, de manière à pouvoir céder à la salle (900) de séjour une quantité (Q_FC) de chaleur de piles à combustible et/ou le groupe (200) de pile à combustible est relié calorifiquement par un conduit pour du liquide de refroidissement, à l'appareil (630) de chauffage avec ventilation constitué pour la ventilation et/ou le chauffage de la salle (900) de séjour et/ou à l'accumulateur (450) d'eau chaude ou peut l'être.

15. Installation (500) de production d'énergie domestique suivant au moins l'une des revendications 12 à 14, comportant en outre un échangeur de chaleur (600) air-air, qui est relié calorifiquement au moins de temps en temps à la ventilation/ lavage du groupe (300) d'électrolyse et/ou du groupe (200) de pile à combustible et/ou de batterie et/ou de l'électronique de puissance et/ou du brûleur catalytique et par lequel la chaleur perdue accumulée des modules (Q_Module) reliés peut être cédée à la salle (900) de séjour.
